# FASCICULE DE BREVET EUROPEEN

(11) **EP 2 768 592 B1**
(45) Date de publication et mention de la délivrance du brevet: **16.12.2015**
(21) Numéro de dépôt: 12781366.5
(22) Date de dépôt: 01.10.2012
(51) Int. Cl.: B01D 17/02

(54) **DISPOSITIF DE COLLECTE ET DE SEPARATION DE LIQUIDES AQUEUX ET/OU HUILEUX ET DE LIQUIDE CRYOGENIQUE**
VORRICHTUNG ZUM SAMMELN UND TRENNEN VON WÄSSRIGEN UND/ODER ÖLHALTIGEN FLÜSSIGKEITEN UND KRYOGENEN FLÜSSIGKEITEN
DEVICE FOR COLLECTING AND SEPARATING AQUEOUS AND/OR OILY LIQUIDS AND CRYOGENIC LIQUID

(30) Priorité: 20.10.2011 FR 1159486
(43) Date de publication de la demande: 27.08.2014
(73) Titulaire: SAIPEM S.A., 78180 Montigny Le Bretonneux (FR)
(72) Inventeur: FARGIER, Cyrille, F-78000 Versailles (FR); MONTROCHER, Philippe, F-78000 Versailles (FR)
(74) Mandataire: Domange, Maxime
(86) Numéro de dépôt international: PCT/FR2012/052220
(87) Numéro de publication internationale: WO 2013/057405

(56) Documents cités:
- DE-A1- 3 401 934
- US-A- 3 162 510
- US-A- 3 212 232

## Description

La présente invention concerne un dispositif de collecte et de séparation de liquides aqueux et/ou huileux et de liquide cryogénique, de préférence du gaz liquéfié tel que du GNL (gaz naturel liquéfié), ci-après aussi dénommé séparateur.

La présente invention concerne plus particulièrement un séparateur de fluides polluants tels de l'eau de ruissellement, de l'huile ou encore de tout autre liquide industriel, lorsque du GNL ou gaz naturel liquéfié à -165°C se trouve mêlé aux dits fluides polluants.

La présente invention concerne plus particulièrement un tel séparateur installé sur un support installé en mer, soit en mer ouverte, soit en zone protégée, telle un port, de manière fixe ou flottant, c'est-à-dire reposant ou respectivement ancré au fond de la mer, comprenant une installation de traitement de liquide dangereux et/ou corrosif, de préférence du gaz naturel liquéfié (GNL), sur le pont dudit support et au moins une cuve de stockage de dit liquide intégré au sein de la coque dudit support sous ledit pont.

Ce type de support peut être en particulier une barge de traitement et de stockage de GNL de type FPSO ou FSRU ou un navire, notamment avec une coque et des cuves de stockage en acier ou en béton tel que décrit dans WO 0130648, comme explicité ci-après.

Le gaz naturel à base de méthane est soit un sous-produit des champs pétroliers, produit en quantité faible ou moyenne, en général associé à du pétrole brut, soit un produit majeur dans le cas des champs de gaz, où il est alors en combinaison avec d'autres gaz, principalement des alcanes en C-2 à C-4, du CO2, de l'azote, et des traces d'autres gaz. Plus généralement, le gaz naturel comporte majoritairement du méthane, de préférence au moins 85% de méthane, les autres principaux constituants étant choisis parmi l'azote et des alcanes en C-2 à C-4, à savoir de l'éthane, du propane, du butane.

Lorsque le gaz naturel est associé en faible quantité à du pétrole brut, il est en général traité et séparé, puis utilisé sur place comme carburant dans des chaudières, des turbines à gaz ou des moteurs à piston pour produire de l'énergie électrique et des calories utilisées dans les processus de séparation ou de production.

Lorsque les quantités de gaz naturel sont importantes, voire considérables, on cherche à le transporter de manière à pouvoir les utiliser dans des régions éloignées, en général sur d'autres continents et, pour ce faire, la méthode préférée est de le transporter à l'état de liquide cryogénique (-165°C) sensiblement à la pression atmosphérique ambiante. Des navires de transport spécialisés appelés « méthaniers » possèdent des cuves de très grandes dimensions et présentent une isolation extrême de manière à limiter l'évaporation pendant le voyage.

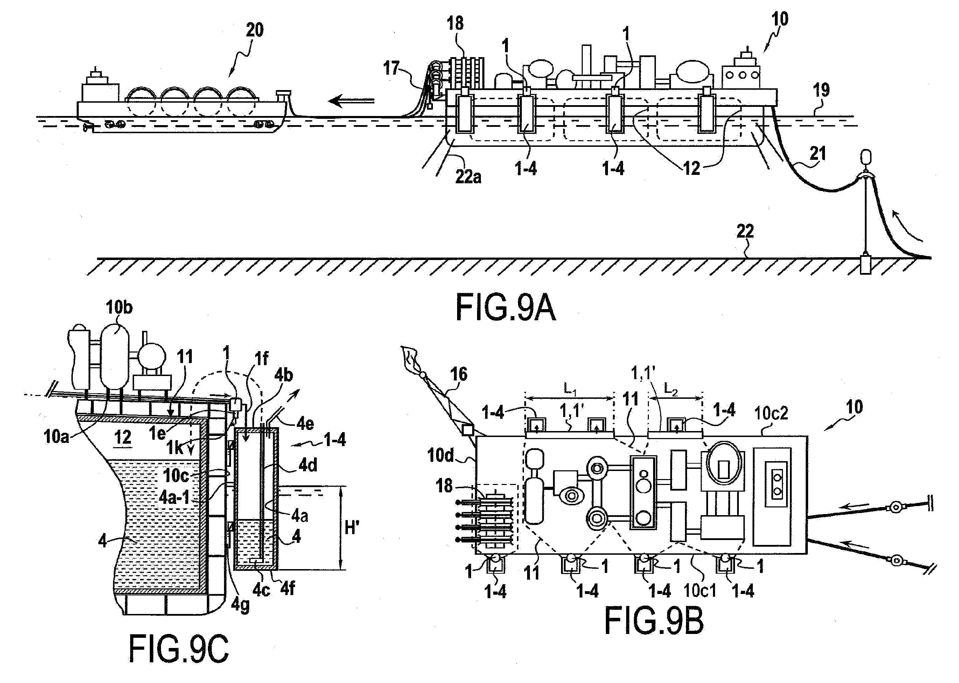

Sur les champs pétroliers en mer ouverte, situés à grande distance de la côte, les produits pétroliers tel que le pétrole ou le gaz sont en général récupérés, traités et stockés à bord d'un dit support flottant notamment du type appelé FPSO 10 (« Floating-Production-Storage-Offloading »), c'est à dire support flottant de production, de stockage et de déchargement. Les produits pétroliers tel que pétrole et/ou gaz sont alors transférés vers des navires enleveurs 20 qui viennent régulièrement, par exemple toutes les semaines, pour récupérer la production du champ et l'exporter vers les lieux de consommation. Lorsqu'il s'agit de transfert de gaz liquéfié de type GNL à -165°C, les dispositifs de transfert comportent au moins une conduite 17 pour évacuer le gaz des cuves du navire enleveur 20 au fur et à mesure du remplissage par le GNL, en particulier du gaz méthane, de manière à le reliquéfier à bord du FPSO 10 comme décrit ci-après en référence à la figure 9A.

Un autre domaine technique est celui du stockage en mer de GNL près d'un site d'utilisation, par exemple pour expédier le gaz sur le continent après l'avoir regazéifié, ou encore le transformer sur place, à bord du support flottant, en énergie électrique pour réexpédier ladite électricité dans le réseau local à terre. Dans ce cas, le navire vient décharger sa cargaison de GNL et le support flottant est appelé « FSRU » (Floating Storage Regaseification Unit), c'est à dire unité flottante de stockage et de regazéification.

On entend ici plus particulièrement par « installation de traitement » s'agissant de GNL, toute installation de liquéfaction du gaz naturel en GNL, toute installation de regazéification du GNL et/ou toute installation de transfert de GNL entre ledit support et un navire enleveur de stockage de GNL de type méthanier disposé à couple ou en tandem à côté dudit support.

Des installations de traitement de ce type comportent des moyens ou composants tels que pompes, conduites de circulation, compresseurs, échangeurs de chaleur, dispositifs de détente, en général des turbines de décompression, échangeurs cryogénique, réservoirs et des conduites de liaison et éléments de raccordement entre ces différents dispositifs.

Des fuites du liquide traité et stocké, notamment de gaz liquéfié GNL le cas échéant, peuvent se produire soit au niveau de vannes, de pompes, d'échangeurs, de réservoirs ou de conduites, soit, plus particulièrement, au niveau des joints des éléments de raccordements ou desdits composants, soit encore par rupture d'un ou plusieurs de ces divers composants.

Les fuites de GNL sont particulièrement dangereuses pour trois raisons :
1. Le GNL répandu se gazéifie rapidement au contact de l'air et des surfaces solides, et en se mélangeant à l'air ambiant crée un mélange hautement dangereux car explosible en présence de la moindre étincelle ou du moindre point chaud.
2. Les équipements véhiculant ou contenant du GNL (-165°C) sont réalisés dans des matériaux résistant à ces températures cryogéniques, en général des aciers à base de nickel ou encore de l'invar. Ces aciers spéciaux sont très coûteux et en général ne sont pas utilisés pour les éléments de supportage ou pour la structure du FPSO pour lesquels on utilise en général des aciers courants. Mais, ces aciers courants deviennent cassants au contact de très basses températures et perdent leurs résistance mécanique, ce qui risque de conduire à la rupture d'éléments de structure, voire du pont du FPSO dans le cas d'une fuite importante directement sur ledit pont, si les endroits critiques ne sont pas protégés par des matériaux isolants, qui eux résistent très bien aux températures cryogéniques.
3. Le contact brutal entre le GNL en grandes quantités et l'eau de mer présente un grand danger, car le réchauffage brutal du GNL (-165°C) par de l'eau de mer à 10-20°C en présence d'air, donc d'oxygène crée des risques très importants d'explosion instantanée.

Des moyens de collecte de fuites de GNL sont en général installés au droit des équipements critiques et dirigent ledit GNL vers des réservoirs où ledit GNL sera récupéré, puis, soit regazéifié et envoyé à une torchère pour son élimination, soit transféré par pompage vers l'une des cuves de stockage du FPSO. Ces moyens de collecte sont en général à ciel ouvert, et de ce fait ils collectent aussi toutes sortes de pollutions, telles des huiles fuyant de diverses machines, par exemple des machines tournantes tels des compresseurs, ou encore des eaux de ruissellement et de pluie ou des embruns, en général chargés de poussière.

Les eaux et les huiles sont en général dirigées vers des bacs de décantation dans lesquels, de façon connue, l'huile, l'eau et, le cas échéant, les particules solides se séparent naturellement par simple gravité, en raison de leur différence de densité.

Le fait que du liquide cryogénique, notamment du GNL à -165°C, soit présent dans les fluides polluants, empêche l'utilisation directe de tels bacs de décantation et il convient au préalable de séparer le GNL des autres agents polluants avant l'entrée dans ledit bac de décantation.

Le but de la présente invention est de remédier aux conséquences liées à ces problèmes de fuites de liquides, incluant du liquide cryogénique, notamment du gaz liquéfié, utile notamment sur le pont de tels supports en mer, en séparant dans un premier temps le GNL des autres liquides polluants.

Pour ce faire, la présente invention fournit un dispositif de collecte et de séparation de liquides aqueux et/ou huileux d'une part et de liquide cryogénique d'autre part, de préférence du gaz liquéfié tel que du GNL, comprenant :
a) un premier réservoir comprenant :
   a.1) une paroi de fond dénommée première paroi de fond, traversée par au moins une première conduite tubulaire d'évacuation, ladite première conduite d'évacuation s'étendant d'une hauteur h au-dessus de ladite première paroi de fond, et, de préférence, débouchant à son extrémité inférieure sur une cuve de stockage de liquide aqueux et/ou huileux, dénommé première cuve de stockage, et
   a.2) une paroi latérale dénommée première paroi latérale, de préférence verticale, et
   a.3) de préférence, un couvercle ou plafond recouvrant l'extrémité supérieure dudit premier réservoir, ledit couvercle ou plafond comprenant un premier orifice d'évacuation apte à permettre l'évacuation d'un gaz, et
b) un deuxième réservoir contenu à l'intérieur dudit premier réservoir, ledit deuxième réservoir comprenant :
   b.1) une paroi de fond, de préférence inclinée, dénommée deuxième paroi de fond, positionnée au-dessus du niveau de l'extrémité supérieure de la (ou des) dite(s) première(s) conduite(s) d'évacuation, ladite deuxième paroi de fond délimitant avec ladite première paroi de fond un compartiment inférieur dudit premier réservoir, et
   b.2) une paroi latérale supérieure, dénommée deuxième paroi latérale supérieure, de préférence verticale, délimitant ledit deuxième fond et s'étendant dessus ledit deuxième fond en vis-à-vis de ladite première paroi latérale, de préférence à distance constante de ladite première paroi latérale, ladite deuxième paroi latérale supérieure comprenant au moins un orifice de vidange à sa base juste au-dessus de ladite deuxième paroi de fond, dénommé(s) deuxième(s) orifice(s) de vidange, le(s) deuxième(s) orifice(s) de vidange communiquant avec un passage latéral, et
   b.3) une paroi latérale inférieure dénommée deuxième paroi inférieure, de préférence verticale, s'étendant dessous ledit deuxième fond en vis-à-vis de ladite première paroi latérale, de préférence à distance constante de ladite première paroi latérale, et s'étendant jusqu'en dessous du niveau de l'extrémité supérieure de la (ou des) dite(s) première(s) conduite(s) d'évacuation, ledit passage latéral étant délimité d'un côté par lesdites deuxièmes parois latérales supérieure et inférieure et de l'autre côté par ladite première paroi latérale, et
c) au moins un conduit de collecte de liquides apte à recueillir les liquides à séparer et à les déverser au sein dudit deuxième réservoir, ledit conduit de collecte traversant ladite première paroi latérale dudit premier réservoir ou son couvercle ou plafond et/ou débouchant dans ledit deuxième réservoir ou dans le compartiment supérieur dudit premier réservoir au-dessus de l'extrémité supérieure ouverte dudit deuxième réservoir, et
d) au moins une deuxième conduite d'évacuation, de préférence débouchant à une extrémité sur une cuve de stockage de GNL dénommée deuxième cuve de stockage de GNL, à l'extérieur dudit premier réservoir, ladite deuxième conduite d'évacuation traversant ladite première paroi latérale dudit premier réservoir ou son couvercle ou plafond et/ou débouchant à l'autre extrémité dans ledit premier réservoir au-dessus de l'extrémité supérieure ouverte dudit deuxième réservoir, et
e) ledit premier réservoir étant rempli d'eau ou coopérant avec un dispositif d'alimentation en eau apte à le remplir d'eau, dans ledit passage latéral et dans ledit compartiment inférieur dudit premier réservoir en dessous dudit deuxième réservoir, de préférence de l'eau de mer à température ambiante, jusqu'à un niveau au-dessus de l'extrémité supérieure de (ou des) dite(s) première(s) conduite(s) d'évacuation et en dessous desdits deuxièmes orifices de vidange dudit deuxième réservoir.

On comprend que :
- ledit deuxième réservoir est plus petit que le premier réservoir tant en hauteur de sa paroi latérale que de sa section transversale horizontale ; et
- ledit compartiment inférieur dudit premier réservoir est ouvert au niveau dudit passage latéral, et
- ledit passage latéral constitue un passage obligé pour permettre, le cas échéant, à un liquide de passer de l'intérieur dudit deuxième réservoir vers ledit compartiment inférieur dudit premier réservoir dessous ledit deuxième réservoir, et inversement, en passant par le(s)dit(s) deuxième(s) orifice(s) de vidange ou si le deuxième réservoir est plein en débordant par-dessus la paroi latérale du deuxième réservoir et en passant dans l'espace entre les deux parois latérales des deux réservoirs avant de passer dans ledit passage annulaire lorsque celui-ci n'est pas bouché, notamment par un anneau de glace comme décrit ci-après, et
- ladite première conduite d'évacuation est ouverte ou apte à s'ouvrir à son extrémité supérieure et à son extrémité inférieure, de sorte que lorsque ledit premier réservoir se remplit, il se vide en passant par ladite extrémité supérieure ouverte de ladite première conduite d'évacuation.

Ce dispositif coopère ou est apte à coopérer avec une dite deuxième cuve de stockage de GNL et une dite première cuve de stockage de liquide aqueux et/ou huileux, constituant de préférence un dispositif de séparation gravitaire huile-eau, et il permet ainsi d'évacuer et séparer des liquides de fuite aqueux et/ou huileux d'une part et du GNL d'autre part comme suit.

Lorsque le liquide de fuite comporte du GNL, il tombe dans le deuxième réservoir et s'évacue vers ledit passage annulaire par lesdits orifices de vidange. Le fait qu'un niveau d'eau soit maintenu au sein dudit premier réservoir fait effet de siphon hydraulique empêchant que du gaz ne s'écoule depuis le ciel de gaz des premier et deuxième réservoirs vers ladite première conduite d'évacuation. D'autre part, le maintien du niveau d'eau à l'intérieur du premier réservoir en dessous desdits deuxièmes orifices de vidange permet que le liquide de fuite et notamment le GNL puisse s'écouler en dehors dudit deuxième réservoir par lesdits deuxièmes orifices de vidange. Et, surtout, dans le cas de fuite de GNL, celui-ci au contact de l'eau engendre la prise en glace de l'eau à son contact et la formation d'un bouchon annulaire de glace le long dudit passage annulaire entre la jupe latérale dessous le deuxième réservoir et ladite première paroi latérale, ledit bouchon empêchant l'écoulement du GNL par ladite première conduite d'évacuation, ledit GNL s'accumulant dans ledit deuxième réservoir et dans ledit premier réservoir et pouvant ainsi être évacue séparément par le deuxième orifice d'évacuation.

La présente invention fournit également un procédé de séparation de liquides comprenant des liquides aqueux et/ou huileux et/ou un liquide cryogénique, de préférence du gaz liquéfié tel que du GNL, à l'aide d'un dispositif de collecte et de séparation selon l'invention, caractérisé en ce qu'il comprend les étapes successives suivantes dans lesquelles :
1) on recueille un dit liquide à séparer dans un dit conduit de collecte et on le déverse dans ledit deuxième réservoir, ledit premier réservoir étant rempli d'eau dans ledit compartiment inférieur dudit premier réservoir dessous ledit deuxième réservoir, jusqu'à un niveau au-dessus de l'extrémité supérieure de la (ou des) dite(s) première(s) conduite(s) d'évacuation et en dessous desdits deuxièmes orifices de vidange dudit deuxième réservoir, et
2) on évacue ledit liquide à séparer par lesdits deuxièmes orifices de vidange à la base dudit deuxième réservoir vers ledit passage latéral, et
3) selon la nature du liquide à séparer, on réalise l'une des étapes 3a) ou 3b) suivantes, dans lesquelles :
   3a) si le liquide comprend un liquide aqueux et/ou huileux, celui-ci est acheminé vers une dite première conduite d'évacuation, de préférence par mise en action d'un dispositif d'alimentation et de circulation d'eau accélérant l'évacuation d'eau par une dite première conduite d'évacuation, ledit dispositif d'alimentation et de circulation en eau assurant concomitamment le maintien du niveau d'eau au sein dudit réservoir au-dessus de l'extrémité supérieure dudit premier conduit d'évacuation et en dessous desdits deuxièmes orifices de vidange dudit deuxième réservoir, et
   3b) si le liquide comprend un liquide cryogénique, de préférence du gaz liquéfié tel que du GNL, celui-ci engendre la création d'un bouchon de glace au contact de l'eau dans ledit passage latéral, voire une couche de glace sur toute la surface de l'eau au sein du compartiment dudit premier réservoir de sorte que
      3b.1) si les quantités et débits de liquide cryogénique au sein dudit deuxième réservoir font que le volume de liquide cryogénique ne déborde pas dudit deuxième réservoir, ledit liquide cryogénique peut être regazéifié par baisse de sa température au contact des parois latérales et parois de fond dudit deuxième réservoir et évacué par ledit premier orifice d'évacuation dudit premier réservoir, et
      3b.2) si les quantités et débits de liquide cryogénique au sein dudit deuxième réservoir font que le volume de liquide cryogénique déborde du deuxième réservoir et remplit au moins en partie le compartiment supérieur dudit premier réservoir, ledit liquide cryogénique peut être évacué par ladite deuxième conduite d'évacuation dans une dite deuxième cuve de stockage.

Plus particulièrement, ladite deuxième cuve de stockage est fixée contre et à l'extérieur d'un bordé d'un support installé en mer comprenant une installation de traitement sur le pont dudit support, ledit pont comprenant ou supportant des premiers moyens de transfert aptes à permettre le transfert de liquides s'écoulant d'une partie au moins de ladite installation, par simple gravité vers un dit conduit de collecte d'un dit dispositif de collecte et de séparation comprenant une dite deuxième conduite d'évacuation débouchant à son autre extrémité dans une dite deuxième cuve de stockage de gaz GNL, et on alimente ledit premier réservoir avec de l'eau constituée d'eau de mer à température ambiante.

Dans une première variante de réalisation, un dispositif de collecte et de séparation selon l'invention comprend :
a) un dit premier réservoir comprenant :
   a.1) une dite première paroi de fond traversée par une première conduite tubulaire d'évacuation, de préférence un tube central vertical, et
   a.2) une dite première paroi latérale cylindrique verticale, et
   a.3) un dit couvercle ou plafond recouvrant l'extrémité supérieure dudit premier réservoir, ledit couvercle ou plafond comprenant un premier orifice d'évacuation de gaz, et
b) un dit deuxième réservoir contenu à l'intérieur dudit premier réservoir, ledit deuxième réservoir comprenant :
   b.1) une dite deuxième paroi de fond inclinée, de préférence tronconique, et
   b.2) une dite deuxième paroi latérale supérieure cylindrique verticale coaxiale XX' à ladite première paroi latérale et de plus petite section horizontale, et
   b.3) une dite deuxième paroi latérale inférieure formant jupe latérale périphérique cylindrique verticale coaxiale XX' à ladite première paroi latérale et de plus petite section horizontale, s'étendant dessous ledit deuxième fond autour de l'extrémité supérieure de ladite première conduite d'évacuation, de préférence en prolongation de ladite deuxième paroi latérale supérieure,
c) un dit passage latéral formant un passage annulaire, de préférence de largeur constante, entre lesdites deuxièmes parois latérales supérieure et inférieure d'une part et ladite première paroi latérale dudit premier réservoir d'autre part.

Plus particulièrement, lesdites première et deuxièmes parois latérales supérieure et inférieure et dite première conduite d'évacuation sont cylindriques coaxiales à sections circulaires.

Dans un autre mode de réalisation, lesdites première et deuxièmes parois latérales supérieure et inférieure sont de section carré ou rectangulaire.

Dans une seconde variante de réalisation, ladite première paroi latérale forme un dit premier réservoir parallélépipédique allongé et ladite deuxième paroi latérale supérieure forme un dit deuxième réservoir parallélépipédique de même longueur et de plus petite largeur que ledit premier réservoir, ladite première paroi de fond étant traversée par une pluralité de dites premières conduites d'évacuation disposées parallèlement entre elles successivement dans la direction longitudinale YY' de ladite première paroi de fond, ladite deuxième paroi latérale supérieure comportant en partie supérieure une pluralité de dites deuxièmes conduites d'évacuation de GNL, et lesdits premier et deuxième réservoirs sont disposés l'un par rapport à l'autre de sorte que ledit passage latéral est de forme parallélépipédique longitudinale, lesdites orifices de vidange et ledit passage latéral s'étendant le long d'un seul bord longitudinal de ladite deuxième paroi de fond.

On comprend que si ledit passage latéral s'étend le long d'une seule face longitudinale de ladite deuxième paroi latérale, l'autre face longitudinale de ladite deuxième paroi latérale dudit deuxième réservoir peut soit être plaquée contre une face de la première paroi latérale dudit premier réservoir soit être commune en partie avec celle-ci.

Dans un mode préféré de réalisation, ladite deuxième paroi de fond est supportée et solidaire de structures de support dénommées pieds reposant sur ladite première paroi de fond, lesdits structures support présentant de préférence des surfaces étendues de contact avec l'eau contenue dans ledit compartiment inférieur du premier réservoir dessous ledit deuxième réservoir, aptes à permettre un transfert de calories entre l'eau contenu dans ledit premier réservoir et ladite deuxième paroi de fond.

De préférence encore, ladite deuxième paroi de fond supporte et est solidaire en sous-face de plaques métalliques ou d'acier de préférence verticales, constituant des surfaces étendues de contact avec l'eau contenue dans ledit premier réservoir dessous ledit deuxième réservoir, apte à permettre un transfert de calories entre l'eau contenue dans ledit premier réservoir et le liquide contenu dans ledit deuxième réservoir, lesdites plaques métalliques n'étant pas en contact avec ladite première paroi de fond dudit premier réservoir.

On comprend que lesdites plaques métalliques forment des ailettes de radiateur. Ce mode de réalisation est avantageux en ce qu'il permet de favoriser et accélérer l'ébullition du GNL, et donc sa vaporisation complète, contenu en petite quantité au sein dudit deuxième réservoir le cas échéant du fait que les calories du volume d'eau en contact avec les pieds se trouve transférées plus rapidement à la deuxième paroi de fond au contact avec ledit GNL.

De préférence encore, ledit premier réservoir comprend au moins un premier orifice d'alimentation en eau, de préférence traversant ladite première paroi latérale et/ou première paroi de fond, débouchant dans ledit premier réservoir en dessous du niveau de l'extrémité inférieure de ladite deuxième paroi inférieure latérale et coopérant avec un dispositif d'alimentation et de circulation d'eau en continu à l'extérieur dudit premier réservoir, ledit dispositif d'alimentation et de circulation d'eau étant apte à permettre d'évacuer ladite eau par ladite première conduite d'évacuation.

Ainsi il est possible de maintenir le niveau d'eau à l'intérieur en dessous desdits premiers orifices de vidange pour que le liquide de fuite et notamment le GNL puisse s'écouler en dehors dudit deuxième réservoir par lesdits orifices de vidange, d'une part, et, d'autre part, on évite ainsi que du gaz ne s'écoule depuis le ciel de gaz des premier et deuxième réservoirs vers ladite première conduite d'évacuation.

Mais, en outre, la circulation d'eau en continu permet d'éviter la prise en glace de tout le volume d'eau au sein dudit premier réservoir dessous ledit deuxième réservoir pour limiter la prise de glace à un disque superficiel de glace à la surface de l'eau, grâce à l'apport continu de calories par ladite eau en circulation. Cette prise en glace est due au transfert des frigories du GNL depuis la deuxième paroi de fond vers le volume d'eau transféré par l'atmosphère gazeuse entre la deuxième paroi de fond et la surface de l'eau et surtout transférées par lesdits pieds.

Dans un autre mode de réalisation, on met en oeuvre un dispositif de déclenchement du dispositif de circulation comprenant une pompe avec par exemple un flotteur à la surface de l'eau qui commande le déclenchement de la pompe dès que le niveau de l'eau baisse en dessous de l'extrémité supérieure dudit premier conduit comme dans un système de chasse.

Plus particulièrement, ledit premier réservoir comprend en outre un deuxième orifice d'évacuation d'eau et/ou une deuxième conduite d'évacuation d'eau, de préférence traversant ladite première paroi latérale ou première paroi de fond, débouchant dans ledit premier réservoir en dessous du niveau de l'extrémité inférieure de ladite deuxième paroi latérale inférieure et coopérant avec un dit dispositif de circulation d'eau en continue à l'extérieur dudit premier réservoir, ladite eau s'évacuant par ledit deuxième orifice d'évacuation d'eau de façon à maintenir le niveau d'eau à l'intérieur dudit premier réservoir en dessous desdits deuxièmes orifices de vidange.

Ce mode de réalisation permet de favoriser et accélérer le transfert de calories entre le volume d'eau et le GNL au sein dudit deuxième réservoir notamment lorsqu'un disque superficiel de glace s'est formé et empêche la circulation avec évacuation d'eau par ladite première conduite d'évacuation.

Plus particulièrement encore, ladite première cuve de stockage de liquide comprend un dispositif de séparation gravitaire eau-huile, apte à séparer et évacuer séparément une phase huileuse et une phase aqueuse.

Avantageusement encore, au moins lesdites première et deuxièmes parois latérales supérieure et inférieure et dites première et deuxième parois de fond et lesdits pieds sont en tôle métallique ou d'acier.

La présente invention fournit également un support installé en mer, de manière fixe ou flottant, comprenant une installation de traitement susceptible de générer des fuites de liquides aqueux et/ou huileux, et des fuites de liquide cryogénique, de préférence du gaz liquéfié tel que du GNL, caractérisé en ce qu'il est équipé d'un dispositif de collecte et de séparation selon l'invention.

Plus particulièrement, un support selon l'invention comprend une dite installation de traitement sur le pont dudit support, et au moins une première cuve de stockage de GNL intégrée au sein de la coque dudit support sous ledit pont et en ce qu'il comprend au moins une dite deuxième cuve de stockage de GNL de liquide cryogénique, situé à l'extérieur dudit support et situé au moins en partie, de préférence entièrement, en contrebas du pont dudit support sur lequel repose ladite installation, ladite deuxième cuve de stockage de GNL étant fixée contre un bordé dudit support, de préférence de manière réversible, ledit pont comprenant ou supportant des premiers moyens de transfert aptes à permettre le transfert de liquides s'écoulant d'une partie au moins de ladite installation, par simple gravité vers un dit conduit de collecte d'un dit dispositif de collecte et de séparation comprenant une dite deuxième conduite d'évacuation débouchant à son autre extrémité à une dite deuxième cuve de stockage de gaz GNL, lesdits premiers moyens de transfert de liquide de fuite comprenant de préférence un platelage incliné, s'étendant depuis dessous une dite partie au moins de l'installation jusqu'à un dit conduit de collecte.

Plus particulièrement encore, ladite deuxième cuve de stockage de GNL comprend en outre une pompe et une deuxième conduite de liaison aptes à transférer ledit liquide cryogénique contenu dans ladite deuxième cuve vers une dite première cuve de stockage au sein de la coque dudit support.

Ces premiers moyens de transfert peuvent comprendre des structures formant gouttières et éventuellement des éléments de conduites et/ou moyens de pompage de liquide.

Le positionnement et la fixation réversible desdites deuxièmes cuves de stockage sous forme de réservoirs à l'extérieur du support selon la présente invention, ci-après désigné par « réservoirs externes » présente les avantages de :
- pouvoir fabriquer ledit support dans une cale sèche de dimension standard en largeur ou longueur, c'est-à-dire sans nécessiter de cale sèche surdimensionnée ce qui est avantageux car la taille des cales sèches est un facteur très limitant pour la taille de supports et donc aussi les capacités de stockage des cuves qu'ils contiennent, et
- pouvoir fabriquer desdits réservoirs externes séparément, le cas échéant à plus grande proximité du site en mer que ladite cale sèche dans laquelle le support aura été fabriqué, et de fixer lesdits réservoirs externes sur ledit support avant remorquage sur site de celui-ci ou sur site après remorquage et ancrage ou dépose sur le fond marin, dudit support, et surtout
- améliorer la sécurité à bord dudit support au regard des risques d'incident et/ou explosion, notamment en évacuant rapidement le liquide de fuite en dehors dudit support, puis vidangeant ledit réservoir externe de manière à remettre le plus rapidement possible l'ensemble des installations en sécurité maximale.

On comprend que la mise en oeuvre desdits premiers moyens de transfert évite tout contact de liquide de fuite avec le pont du support entre autre et plus généralement toute la structure du support d'une part et d'autre part évite un contact prolongé avec l'air atmosphérique.

La présente invention permet donc avantageusement essentiellement à collecter les écoulements de fuite de GNL et les diriger vers desdites deuxièmes cuves de stockage de GNL ou dites « réservoirs externes », c'est-à-dire situés à l'extérieur de la barge, et en contrebas, de manière à ce que les écoulements se fassent naturellement par simple gravité et le plus rapidement possible et sans contact avec la structure du support notamment le pont et sans contact prolongé avec la base des installations de traitement, limitant de ce fait la quantité de GNL qui risque de se vaporiser en créant un mélange gazeux explosif au contact de l'air ambiant.

On entend ici par « bordé dudit support », les parois latérales longitudinales, aussi bien que les parois transversales avant (proue) et arrière (poupe).

Une pluralité de dispositifs de collecte et de séparation selon l'invention et de dits réservoirs externes peuvent ainsi être installés sur les parois de la coque de bâbord et tribord, et le cas échéant sur les parois arrière et avant, chacun d'entre eux collectant le liquide provenant d'un ou de plusieurs éléments de platelage recouvrant une surface restreinte de pontée.

Avantageusement, les parois ou les surfaces dudit dispositif collecteur susceptibles d'être en contact avec ledit liquide de fuite qu'il collecte, notamment la surface supérieure de la partie centrale dudit platelage, sont constituées ou respectivement recouvertes d'une couche de matériau résistant à des températures cryogéniques (inférieur ou égale à -160°C) par ledit liquide de fuite tel que du GNL, notamment un matériau composite tel que le sandwich Chartek^{®}-Intertherm^{®} 7050 commercialisé par la société International (UK) du groupe AKZO-NOBEL, plus particulièrement apte à permettre une isolation thermique cryogénique du GNL à -165° C.

Plus particulièrement encore, ledit support selon l'invention comprend des moyens d'accrochage aptes à fixer une pluralité de dits réservoirs externes le long de ses bordés et chaque dit réservoir externe présente un volume de pas plus de 300 m³, de préférence de 50 à 300 m³.

Des réservoirs externes de ce volume peuvent être fabriqués avec une structure relativement plus légère que celle des cuves internes, car on ne recherche pas un niveau d'isolation élevé, mais plutôt un transfert thermique limité à travers la paroi autorisant une vaporisation rapide du GNL récupéré, sans toutefois que la structure métallique du réservoir ou de ses supports ne descende en dessous -20 à -40°C, ce qui risquerait de conduire à une rupture fragile du métal de ladite structure.

Plus particulièrement encore, ledit réservoir externe est de forme cylindrique allongée d'axe longitudinal vertical (YY') avec une partie seulement dudit réservoir externe immergée notamment à section transversale horizontale, carrée et rectangulaire ou circulaire.

On entend ici par « axe vertical » que ledit axe du réservoir externe est sensiblement perpendiculaire à l'axe longitudinal horizontal XX' du support et sensiblement perpendiculaire au niveau de la mer lorsque la mer est plate.

Ledit réservoir externe reste en partie immergé même lorsqu'il est vide et une partie du réservoir reste au-dessus du niveau de la mer lorsque ledit réservoir est plein.

La forme allongée verticale des réservoirs externes est avantageuse par comparaison avec des réservoirs de plus grande dimension horizontale en ce que une vidange du GNL par pompage laissera en fin de phase de pompage un reliquat de GNL proportionnel à la section horizontale dudit réservoir, donc plus faible que dans le cas de grande dimension horizontale. Dans le cas de grande dimension horizontale, on disposera avantageusement un fond de réservoir en pente, et l'on placera le dispositif de pompage au point le plus bas.

Dans une variante de réalisation, ledit réservoir externe comprend une paroi de fond fixe étanche à l'extrémité inférieure de sa paroi latérale cylindrique.

De préférence, les parois dudit réservoir externe sont isolées thermiquement, de préférence isolé intérieurement, notamment avec de la mousse de polyuréthanne. Cette isolation thermique vise à limiter le transfert thermique dû au réchauffement du GNL afin de maintenir la température des parois en acier du réservoir externe, notamment les parois latérales situées au-dessus du niveau de la mer, à une température supérieure à la température de rupture fragile dudit acier, notamment à une température supérieure à -10°C. A défaut, ledit transfert thermique risquerait de refroidir les éléments de structure en acier du réservoir en dessous d'une température où l'acier présente des risques de rupture fragile, c'est à dire en dessous de -20 à -40°C.

Avantageusement, ledit réservoir externe comprend ou coopère avec des seconds moyens de transfert comprenant une pompe et une conduite de liaison aptes à transférer ledit liquide de fuite contenu dans ledit réservoir externe vers une dite première cuve de stockage au sein de la coque dudit support. En particulier, ledit réservoir externe possède une conduite interne descendant jusqu'au fond, cette dernière étant reliée à une pompe permettant de vidanger ledit réservoir externe et de renvoyer le gaz liquéfié vers une cuve de stockage du support flottant.

Avantageusement encore, ledit réservoir externe comprend en outre des moyens de chauffage dudit liquide contenu dans ledit réservoir externe, de préférence lesdits moyens de chauffage étant des moyens de chauffage par effet joule, de préférence encore lesdits moyens de chauffage étant intégrés dans ou contre ladite paroi latérale cylindrique du réservoir externe ou sa couche d'isolation thermique.

Plus particulièrement, un dispositif de chauffage est un dispositif par chauffage électrique ou par circulation d'eau chaude ou de vapeur. Dans le cas où on vidange par pompage de la phase liquide, ledit dispositif de chauffage est avantageusement situé en partie basse du réservoir externe, et permet donc, après vidange, de finaliser la purge complète dudit réservoir externe, par vaporisation du reliquat et élimination du gaz méthane vers une torchère, ou simplement à l'air libre. Dans le cas où il n'y a pas de dispositif de vidange par pompage, on dispose avantageusement ledit dispositif de chauffage sur toute ou partie de la hauteur de la paroi du réservoir externe, et le cas échéant sur le fond dudit réservoir externe.

Plus particulièrement, ledit réservoir externe comprend en outre un orifice supérieur d'évacuation de gaz, de préférence au niveau du la paroi supérieure du réservoir, apte à permettre l'évacuation en dehors du réservoir externe du liquide GNL qu'il contient après évaporation de celui-ci, de préférence à l'aide d'une conduite de liaison vers une torchère de combustion ou vers le ciel de gaz d'une dite première cuve au sein de la coque, ou à l'air libre.

Plus particulièrement encore, ledit réservoir externe comprend en outre un autre orifice supérieur, de préférence au niveau de la partie supérieure de la paroi latérale cylindrique du réservoir externe, apte à coopérer avec un dispositif d'injection d'agent moussant. Cette injection d'agent moussant vise à créer un milieu inerte à l'intérieur du réservoir externe lorsque le réservoir externe commence à se remplir de GNL. En d'autres termes, on injecte ledit agent moussant lorsqu'une fuite est détectée dans ladite installation. De préférence, lesdits réservoirs externes sont remplis initialement d'un gaz inerte tel que de l'azote.

D'autres caractéristiques et avantages de la présente invention apparaîtront à la lumière de la description détaillée qui va suivre de un ou plusieurs modes de réalisation particuliers en référence aux figures suivantes dans lesquelles :
- la figure 1 représente en coupe verticale axiale et en vue de côté un dispositif de séparation de liquides selon l'invention raccordé à une première cuve de stockage et de séparation gravitaire eau-huile 1-3 et une deuxième cuve de stockage de GNL 1-4,
- la figure 1A est une coupe horizontale et en vue de dessous selon le plan AA de la figure 1, dudit dispositif de séparation selon l'invention à section circulaire,

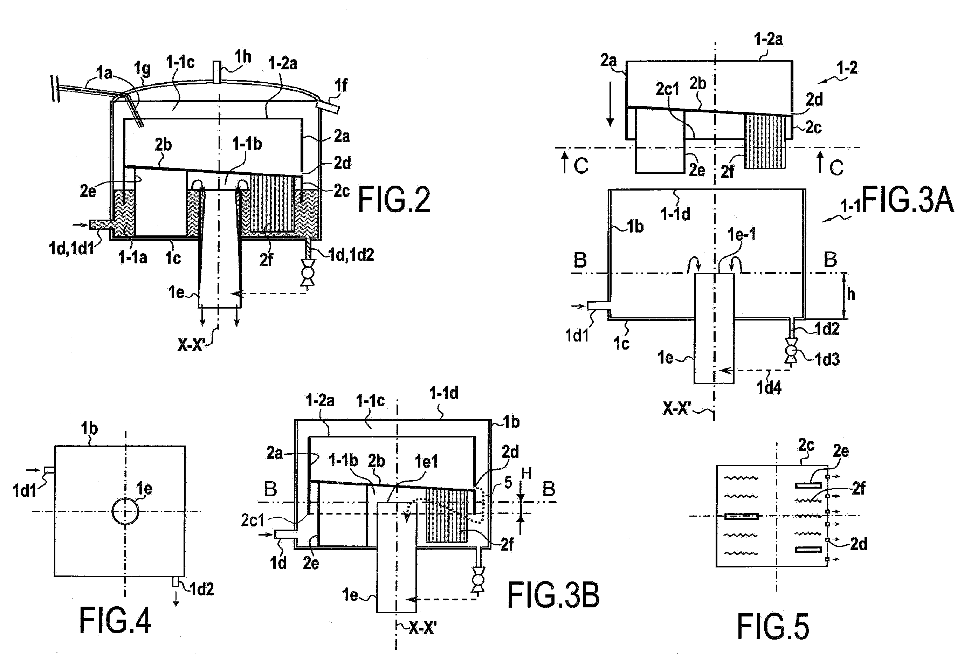

- la figure 2 représente en coupe verticale axiale et en vue de côté un séparateur de liquides selon l'invention, constitué d'un premier réservoir appelé ci-après bac receveur 1-1 et de deux orifices latéraux d'entrée d'eau en partie inférieure, d'une conduite d'évacuation 1e de ladite eau traversant le fond 1c dudit bac receveur, d'un deuxième réservoir dénommé ci-après cuvette 1-2 collectant les liquides à séparer 3 ou 4, ladite cuvette ayant un fond incliné 2b et présentant en partie basse une pluralité d'orifices de vidange 2d communicant avec ledit bac receveur 1-1. Un couvercle, de préférence étanche 1g recouvre ledit bac receveur 1-1, ledit couvercle étant muni sur le dessus d'un orifice d'évacuation de gaz 1h et sur le côté d'un deuxième orifice d'évacuation de liquide 1f. Une circulation d'eau de mer 1-1a est établie de manière permanente au sein dudit bac receveur 1-1,

- la figure 3A représente en coupe verticale axiale en vue de côté, le pré-assemblage de la cuvette dans le bac receveur, ladite cuvette comportant une pluralité de pieds destinés à reposer sur le fond dudit bac receveur,
- la figure 3B représente en coupe verticale axiale en vue de côté, la cuvette reposant au fond dudit bac receveur, le cheminement des liquides arrivant dans la cuvette et tombant dans le bac receveur est représenté en pointillés,
- la figure 4 représente en vue de dessus ledit premier réservoir de forme carrée, dénommé ci-après bac receveur dépourvu de son couvercle étanche,
- la figure 5 représente en coupe horizontale en vue de dessous le deuxième réservoir de forme carrée, dénommé ci-après cuvette munie de trois pieds et d'ailettes de réchauffage du fond oblique de ladite cuvette,
- la figure 6A est une vue en coupe verticale axiale et de côté du dispositif 1 en présence d'une faible pollution de type huile + eau, dite pollution mineure se déversant d'abord dans la cuvette puis dans le bac receveur rempli d'eau de mer, l'ensemble de la pollution étant évacuée par le tube central 1e traversant le fond 1c dudit bac receveur,
- la figure 6B est une vue en coupe verticale axiale et de côté d'un dispositif 1 selon l'invention en présence d'une importante pollution de type huile + eau, dite pollution majeure se déversant d'abord dans la cuvette puis débordant de cette dernière au-dessus de sa paroi périphérique, dans le bac receveur rempli d'eau de mer, l'ensemble de la pollution étant évacuée par le tube central traversant le fond 1c dudit bac receveur,

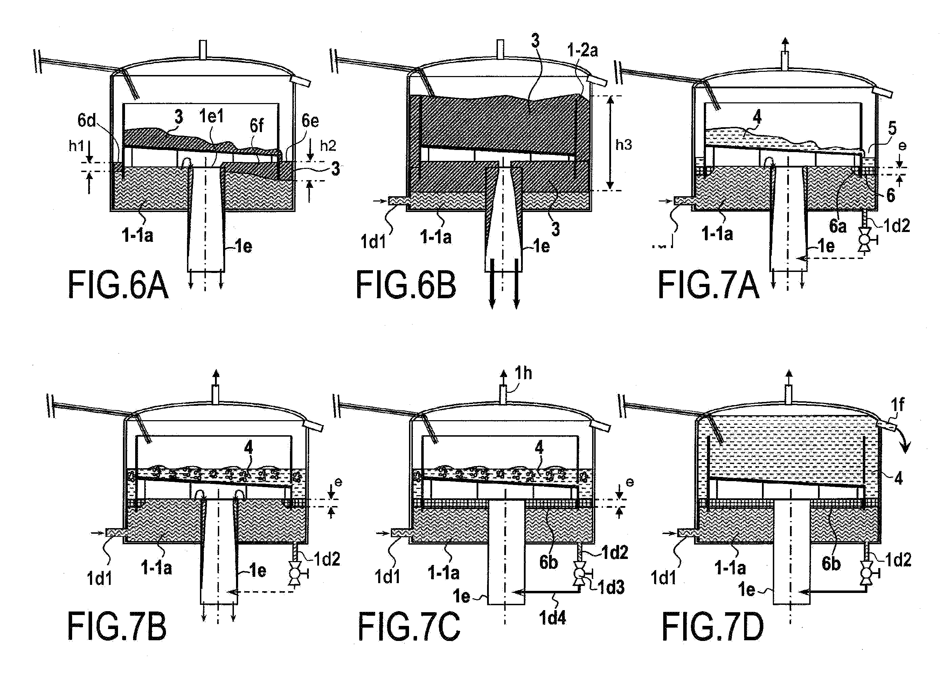

- la figure 7A est une vue en coupe verticale axiale et de côté d'un dispositif 1 en présence d'une faible pollution de type GNL ou gaz naturel liquéfié, dite pollution mineure se déversant d'abord dans la cuvette puis dans le bac receveur rempli d'eau de mer, le GNL se réchauffe au contact de l'eau de mer contenu dans le bac receveur. Il se forme alors un anneau de glace 6 dans le passage 5 entre la face extérieure de la paroi latérale 2a, 2c de la cuvette et la face intérieure de la paroi latérale 1b du bac receveur l'ensemble de la pollution GNL + gaz étant ainsi bloquée et ne pouvant pas atteindre le tube central 1e traversant le fond 1c dudit bac receveur,
- la figure 7B illustre la phase de résorption de la pollution mineure de la figure 6A par vaporisation du GNL, l'apport de calories étant assuré par la circulation d'eau de mer au sein du bac receveur, entre les orifices d'entrée 1d, 1d1-1d2 et le tube central d'évacuation 1e, les pieds 2e et les ailettes de réchauffage trempant dans ladite eau de mer assurant le transfert de calories entre ladite eau de mer et le fond 2c de ladite cuvette,
- la figure 7C illustre la phase de résorption de la pollution mineure de la figure 6B par vaporisation du GNL, dans laquelle s'est formée un disque de glace 6b empêchant toute évacuation de l'eau de mer par l'orifice central d'évacuation : la circulation d'eau de mer entre alors par un orifice latéral 1d1 et ressort par un autre orifice latéral 1d2.
- la figure 7D est une vue en coupe axiale verticale et de côté d'un dispositif en présence d'une importante pollution de type GNL ou gaz naturel liquéfié, dite pollution majeure se déversant dans la cuvette puis remplissant complètement cette dernière et débordant de ladite cuvette dans le bac receveur rempli d'eau de mer. Le GNL se réchauffe au contact de l'eau de mer contenu dans le bac receveur. Il se forme alors un anneau de glace 6 entre la face extérieure de la paroi latérale 2a, 2c de la cuvette et la face intérieure de la paroi latérale 1b du bac receveur, l'ensemble de la pollution GNL + gaz étant ainsi bloquée et ne pouvant pas atteindre le tube central traversant le fond dudit bac receveur. Lorsque le bac receveur est plein, le GNL 4 se déverse par le deuxième orifice d'évacuation supérieur 1f dans un bac de stockage 1-4 de grandes dimensions,
- la figure 8A est une vue en coupe verticale transversale d'une variante de réalisation d'un dispositif 1 selon l'invention, comportant un bac receveur 1-1 parallélépipédique, s'étendant dans une direction longitudinale YY',
- la figure 8B est une vue en perspective schématique d'un dispositif de collecte et de séparation 1 selon l'invention, selon la variante de la figure 8A,
- la figure 9A est une vue de côté d'un support flottant 10 de production de GNL à partir de gaz naturel, en train de transférer sa production vers un navire enleveur 20 de type méthanier,
- la figure 9B est une vue de dessus du support flottant 10 de la figure 9A,
- la figure 9C est une vue en coupe verticale et en vue de côté du support flottant 10 des figures 9A et 9B, comportant des dispositifs de séparation 1, 1' selon l'invention comprenant desdites deuxièmes cuves de stockage de GNL constituées de réservoirs externes 1-4.

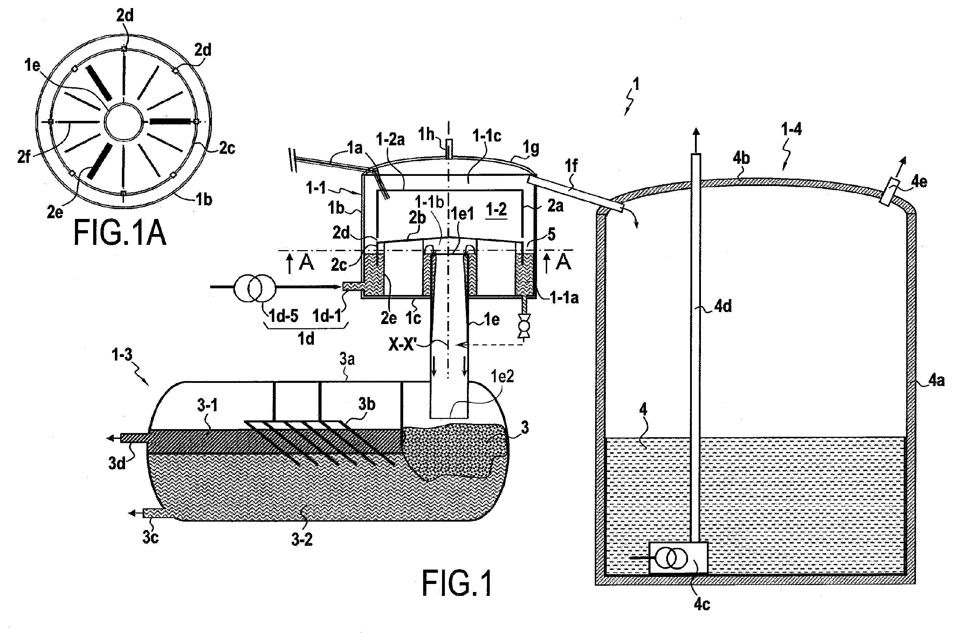

Sur les figures 1 à 7, on a représenté une première variante de réalisation de séparateur 1 selon l'invention, comprenant des premier réservoir ou bac receveur 1-1 et deuxième réservoir ou cuvette 1-2, cylindriques et coaxiaux XX'.

Sur les figures 1 et 1A, la première paroi latérale 1b du premier réservoir et lesdites deuxième paroi latérale supérieure 2a et deuxième paroi latérale inférieure 2c du deuxième réservoir ainsi que ladite première conduite d'évacuation 1e sont à sections circulaires, tandis que sur les figures 3A-3B et 4-5, ladite première paroi latérale 1b et lesdites deuxièmes parois latérales 2a, 2c sont à sections carrées.

Sur la figure 1, on a représenté un séparateur cryogénique selon l'invention 1 recevant par le biais d'un conduit de collecte, comprenant des goulottes ou caniveaux 1a, des composants polluants tels de l'eau de ruissellement, des fuites d'huiles ou encore de GNL, en provenance d'équipements d'une installation de traitement 10b installés par exemple à bord d'un support flottant 10 de production de GNL, tel que représenté sur les figures 9A-9B-9C décrites ci-après.

Ledit bac receveur 1-1 reçoit en partie basse, par au moins un orifice d'alimentation 1d, de l'eau 1-1a, par exemple de l'eau de mer, circulant de préférence de manière permanente, l'eau circulante ressortant par débordement au-dessus de l'extrémité supérieure 1e1 de la première conduite d'évacuation 1e. Le débordement est alors dirigé à l'extrémité inférieure 1e2 de la première conduite d'évacuation 1e vers une première cuve de stockage 1-3 comprenant un dispositif de séparation gravitaire eau-huile ou bac de décantation connu de l'homme de l'art, constitué par exemple d'une citerne allongée 3a comportant des chicanes internes de stabilisation 3b, un orifice inférieur de sortie d'eau 3c et un orifice supérieur de sortie d'huile 3d. En cas de pollution par de l'huile, le mélange huile-eau 3 arrivant par ladite première conduite d'évacuation 1e, débouchant à une extrémité longitudinale de la cuve 1-3. Des moyens de pompage et de contrôle (non représentés) engendrent la progression des fluides 3, 3-1 et 3-2 à travers les chicanes 3b, vers les orifices de sortie 3c et 3d à l'autre extrémité longitudinale de la cuve 1-3. Les phase aqueuse 3-2 et phase huileuse 3-1 se séparent par l'effet de la gravité, l'huile 3-1 plus légère se retrouvant en partie haute évacuée en 3d, tandis que l'eau 3-2, ainsi que les particules solides, plus lourdes, se retrouvent en partie basse et sont évacuées par l'orifice 3c.

En partie haute du bac receveur 1-1, une conduite de sortie 1f de GNL communique avec une dite deuxième cuve de stockage de GNL sous forme de dit réservoir externe 1-4 constitué d'une enveloppe 4a, d'un couvercle étanche 4b, le cas échéant de moyens de pompage 4c évacuant le GNL 4 par une conduite d'évacuation de GNL 4d, et d'un orifice 4e d'évacuation du gaz résultant de la vaporisation du GNL. Le fonctionnement détaillé du séparateur en présence d'eau, d'huile et/ou de GNL, sera détaillé plus avant dans la description de l'invention.

Sur la figure 3A, on a illustré le bac receveur 1-1 et sa première conduite d'évacuation 1e. A l'intérieur dudit bac receveur 1-1, on installe le deuxième réservoir 1-2 formé d'une cuvette constituée d'une paroi de fond 2b inclinée et d'une paroi latérale périphérique 2a, d'une pluralité d'orifices de vidange 2d de faible diamètre, par exemple de 20mm de diamètre percés dans la zone la plus basse de ladite paroi latérale supérieure 2a.

Sur les figures 2, 3A-3B et 5, la première paroi de fond 2b est plane et en pente inclinée vers la droite et les orifices de vidange 2d sont en bas de la pente, tandis que sur la figure 1, la première paroi de fond 2b est de forme conique, ce qui permet de répartir un plus grand nombre d'orifices de vidange 2d sur toute la périphérie circulaire de la base de la paroi latérale supérieure 2a, comme représenté figure 1A. Dans les deux variantes de réalisation, la première paroi de fond 1c est plane et horizontale.

Une jupe périphérique 2c continue est solidaire de la sous-face du fond 2b, de préférence en continuité de la paroi latérale supérieure 2a. L'arête inférieure 2c1 de ladite jupe périphérique 2c est sensiblement horizontale, donc de préférence parallèle au plan du fond 1c du bac receveur 1-1, lorsque ladite cuvette 1-2 repose sur ledit fond 1c, comme illustré sur les figures 1, 2 et 3B : des pieds 2e, de préférence au moins 3 pieds, solidaires de la sous-face du fond 2c de la cuvette 1-2 permettent de positionner ladite cuvette dans ledit bac receveur 1-1.

Une fois les pieds 2e de la cuvette 1-2 posés sur ladite première paroi de fond 1c du bac receveur 1-1, l'extrémité supérieure 1-1d de la paroi latérale 1b du bac receveur 1-1 est recouverte par le couvercle 1g. Et, la partie du bac receveur 1-1 située dessous la paroi de fond 2b constitue un compartiment inférieure 1-1b, tandis que la partie supérieure au-dessus de l'extrémité supérieure 1-2a de la cuvette 1-2 constitue un compartiment supérieur 1-1c du bac receveur 1-1.

La figure 5 est une coupe en vue de dessous de la cuvette selon le plan CC de la figure 3A, dans laquelle on a représenté trois pieds 2e ainsi que 7 ailettes 2f de hauteur légèrement inférieure à celle des pieds 2e et ne reposant pas sur la première paroi de fond 1c, quand les trois pieds 2e de la cuvette 1-2 reposent sur ladite première paroi de fond 1c, comme représenté sur les figures 2 et 3A. La fonction de ces ailettes 2f est de transférer les calories de l'eau 1-1a vers le liquide contenu dans la cuvette 1-2 comme expliqué plus avant dans la description de l'invention ci-après. La hauteur des pieds 2e est ajustée de telle manière que lorsque ladite cuvette 1-2 repose sur le fond du bac receveur 1-1, le plan de l'arête inférieure 2c1 de la jupe latérale 2c soit sensiblement horizontal et sensiblement parallèle au fond 1c sensiblement horizontal du bac receveur 1-1, la distance entre le plan de ladite arête 2c1 et le plan BB tangent au plan de la première conduite d'évacuation 1e ayant une valeur H = 3 à 20 cm, de préférence de 5 à 10 cm, comme représenté sur la figure 3B.

Comme représenté sur la figure 5, les pieds 2e sont avantageusement constitués de plaques métalliques formant un parallélépipède creux tubulaire vertical, offrant ainsi quatre faces planes verticales en contact avec l'eau 1-1a, et les ailettes 2f sont constituées par des morceaux de tôle ondulée parallèle verticale offrant une surface relativement étendue de contact avec l'eau 1-1a, dans laquelle il baigne.

Le diamètre ou plus grand côté en section transversale horizontale dudit bac receveur 1-1 est de l'ordre de 0.5 à 3 m, la largeur du passage annulaire 5 (distance entre les parois 1b et 2a-2c est de 3 à 10 cm et le diamètre de ladite première conduite d'évacuation 1e est de l'ordre de 5 à 30 cm.

La hauteur h du tube 1e au-dessus de la première paroi de fond 1c est de l'ordre de 5 à 50 cm.

Ainsi, comme représenté sur la figure 2, si l'on injecte de manière continue de l'eau 1-1a par les orifices 1d, 1d1-1d2, l'eau remplit le fond du bac receveur 1-1 jusqu'au niveau du plan BB de l'extrémité supérieure 1e1 de la première conduite d'évacuation 1e, puis le surplus d'eau se déverse dans la première conduite d'évacuation 1e pour rejoindre ladite première cuve de stockage constituée d'un bac de décantation 1-3. La partie inférieure de la jupe 2c est alors enfoncée dans la couche d'eau d'une hauteur H et le dispositif 1 constitue ainsi un siphon qui permet d'isoler physiquement les transferts gazeux entre la partie haute du bac receveur 1-1 et ladite première conduite d'évacuation 1e. Le cheminement de liquides polluants 3, tels de l'huile et de l'eau ou un mélange des deux, déversés dans la cuvette 1-2 est illustré en pointillés sur la figure 3B :
- ledit liquide 3 se dirige vers ladite deuxième paroi de fond 2b de la cuvette 1-2, passe par la pluralité d'orifices 2d vers l'espace périphérique formant un passage annulaire 5 situé entre la jupe 2c et la première paroi latérale 1b du bac receveur 1-1,
- puis ledit liquide 3 passe dessous l'arête inférieure 2c1 de ladite jupe 2c, et
- enfin, ledit liquide 3 est entraîné vers l'extrémité supérieure 1e1 de la première conduite d'évacuation 1e de par un effet de courant favorisé par la circulation de l'eau 1-1a à l'aide d'une pompe 1d5.

La figure 4 est une vue de dessus du bac receveur 1-1 de la figure 3A, ledit bac 1-1 étant représenté seul et dépourvu de son couvercle 1g, et de section de forme sensiblement carrée. Il comporte la première conduite d'évacuation 1e ainsi que deux orifices d'alimentation en eau 1d1, 1d2, l'orifice 1d1 servant à l'alimentation en eau, l'orifice 1d2 pouvant servir soit à l'alimentation, soit à l'évacuation de l'eau comme il sera expliqué plus avant dans la description de l'invention.

Sur les figures 6A et 6B on a illustré le comportement du dispositif 1 selon l'invention en présence d'un liquide de pollution 3 constituée d'un mélange d'eau de ruissellement et d'huile en provenance d'une machine tournante, telle un compresseur :
- Si le liquide 3 est en quantité et débit faibles, comme représenté sur la figure 6A, il se forme alors tout autour de la jupe 2c un anneau 6d de faible épaisseur h1 qui reste en place sans être évacué, comme représenté sur la partie gauche de ladite figure 6A.
- Si le liquide 3 est en quantité et débit plus importants, comme représenté sur la partie droite de la même figure 6A, le mélange liquide 3 s'accumule sur la périphérie annulaire 6e de la jupe 2c sur une épaisseur supérieure h2 en raison de la densité du mélange qui reste inférieure à celle de l'eau de mer 1-1a à l'intérieur du bac 1-1. Puis, le mélange 3 passe sous l'arête inférieure 2c1 de la jupe 2c et arrive de l'autre côté 6f de la jupe 2c pour rejoindre l'extrémité supérieure 1e1 ouverte de la première conduite d'évacuation 1e vers le bac de décantation 1-3. Lorsque la pollution s'arrête, il reste sur la périphérie de la jupe 2c un anneau d'huile qui ne peut être éliminé que par lavage de la cuvette 1-2 avec un débit d'eau important, le cas échéant avec des agents dispersants ou émulsifiants qui seront de la même manière dirigés vers le bac de décantation 1-3.
- En cas de pollution très importante, tel qu'illustré sur la figure 6B, l'ensemble des orifices de vidange 2d de la cuvette 1-2 ne suffisent pas à évacuer la pollution : la cuvette 1-2 se remplit et le liquide 3 déborde par-dessus ladite deuxième paroi latérale supérieure 2a, le liquide 3 remplissant ledit bac 1-1 d'une hauteur h3 au-dessus de l'eau 1-1a et remplissant la cuvette 1-2. L'évacuation du liquide 3 à travers la première conduite d'évacuation 1e en passant sous la jupe 2c s'accélère d'autant. Lorsque la fuite s'arrête, la cuvette 1-2 se vide lentement par les orifices 2d, et l'on est alors ramené au cas précédent.

En cas de pollution par du GNL 4, le comportement du dispositif 1 est différent du comportement en présence d'huile, d'eau ou de mélange eau-huile 3. Ce comportement est illustré sur les figures 7A-7D.

Sur la figure 7A, on a illustré une arrivée à faible débit de GNL 4 dans la cuvette 1-2. Le GNL 4 coule le long de la deuxième paroi de fond 2b en pente et ressort par les orifices de vidange 2d. Au contact de l'eau 1-1a qui constitue un apport de chaleur, le GNL 4 se vaporise et s'échappe par l'orifice supérieur 1h, puis est dirigé, par des conduites non représentées, vers une torchère 16 telle que représentée sur la figure 9B dans laquelle il est brûlé. Du fait que l'eau 1-1a cède de la chaleur au GNL 4, il se forme au bout de quelques minutes un anneau de glace 6 dans le passage annulaire 5, ledit anneau de glace étant d'épaisseur e variable et croissante dans le temps. Il se forme de plus un début de prise en glace 6a sur la face interne de la jupe 2c. Cet anneau de glace 6 constitue un bouchon qui isole alors la partie supérieure du bac receveur 1-1 remplie de GNL 4 de sa partie inférieure remplie d'eau 1-1a dans le passage annulaire 5, et empêche ainsi tout transfert de GNL ou de gaz résultant de la vaporisation dudit GNL, vers la première conduite d'évacuation 1e, donc vers le bac de décantation 1-3.

Si la fuite de GNL 4 est de faible quantité, comme représenté sur la figure 7B, une fois l'anneau de glace 6 formé, le GNL se trouve piégé entre ledit anneau, la paroi latérale supérieure 2a de la cuvette 1-2 et la paroi latérale 1b du bac receveur 1-1. Le GNL 4 se vaporise peu à peu par apport de calories en provenance de l'eau 1-1a constamment renouvelée entrant en 1d et ressortant par la première conduite d'évacuation en 1e. Cet apport de calories est transféré à la cuvette 1-2 par le biais de l'atmosphère au-dessus de l'eau 1-1a dans le compartiment inférieur 1-1b, mais surtout par la jupe 2c dont la partie inférieure est en contact avec l'eau 1-1a de circulation, et plus encore par les pieds 2e supportant ladite cuvette, ainsi que par une pluralité d'ailettes 2f solidaires de ladite deuxième paroi de fond 2b de la cuvette et trempant dans ladite eau de circulation. De plus, un apport significatif de calories transite dans la paroi latérale 1b du bac receveur 1-1. Le gaz ainsi produit est récupéré au niveau de l'orifice supérieur 1h et est dirigé, le cas échéant, vers ladite torchère 16 pour élimination.

Lorsque tout le GNL est vaporisé et éliminé, l'anneau de glace 6 se met à fondre et le dispositif reprend naturellement sa configuration initiale telle que décrite en référence à la figure 2.

En cas de problème de circulation d'eau tel que représenté sur la figure 7C, par exemple une panne de la pompe d'alimentation 1d5 ou un débit insuffisant, il existe un risque de formation d'un disque de glace 6b couvrant l'intégralité de la section du bac receveur et de la surface de l'eau 1-1a et bloquant de ce fait l'évacuation de l'eau de circulation 1-1a par la première conduite 1e. A cet effet, on dispose avantageusement un deuxième orifice 1d2 muni d'une vanne 1d3, ladite vanne étant raccordée 1d4 en aval de la conduite d'évacuation 1e. Ce dispositif est avantageux en ce qui concerne la redondance de circulation d'eau, mais on privilégiera l'évacuation par la conduite centrale 1e, car c'est cette dernière qui évacue naturellement les pollutions 3 de type eau-huile, comme expliqué précédemment.

Si la fuite de GNL 4 est très importante, ou de longue durée, comme décrit figure 7D, la cuvette 1-2 se remplit complètement, puis déborde, jusqu'à atteindre le niveau supérieur du bac receveur 1-1 : le GNL 4 se déverse alors par la deuxième conduite d'évacuation 1f vers le deuxième bac de stockage 1-4, décrit en référence à la figure 1.

Lorsque la fuite de GNL s'arrête, le bac receveur 1-1 est plein dudit GNL jusqu'au niveau de la deuxième conduite d'évacuation 1f. Le processus de réchauffage et de vaporisation du GNL décrit en référence aux figures 7B-7C se poursuit jusqu'à vaporisation complète dudit GNL et à la fonte de l'anneau de glace 6-6a, le cas échéant du disque 6b.

Pour éviter que de l'eau ou de l'huile ne s'écoule par la deuxième conduite d'évacuation 1f lors d'une pollution importante par un liquide 3, telle que décrite en référence à la figure 6B, ladite deuxième conduite d'évacuation 1f sera disposée au-dessus du plan horizontal de l'arête supérieure 1-2a de la paroi latérale supérieure, par exemple 10 à 50 cm au-dessus. Ainsi, seul le GNL pourra atteindre ce niveau, ce qui ne se produira que lors de fuites de GNL importantes.

Sur les figures 2, 3A-3B, 4, 5, 6A-6B, 7A-7B-7C-7D, le bac receveur 1-1 et la cuvette 1-2 présentent une section horizontale sensiblement carrée, tandis que sur les figures 1-1A le bac receveur 1-1 et la cuvette 1-2 présentent une section horizontale circulaire, le fond 2b1 de la cuvette 1-2 étant de forme conique, l'axe XX' du cône étant de préférence confondu avec l'axe vertical XX' du cylindre formé par la paroi latérale 2a, 2c de ladite cuvette 1-2. Les orifices 2d au nombre de 8, sont uniformément répartis sur la circonférence de la cuvette 1-2. Trois pieds 2e, uniformément répartis, supportent ladite cuvette, tandis que 7 ailettes de réchauffage 2f, uniformément réparties, assurent le transfert thermique entre l'eau de circulation 1-1a et la deuxième paroi de fond 2b de la cuvette, comme expliqué précédemment.

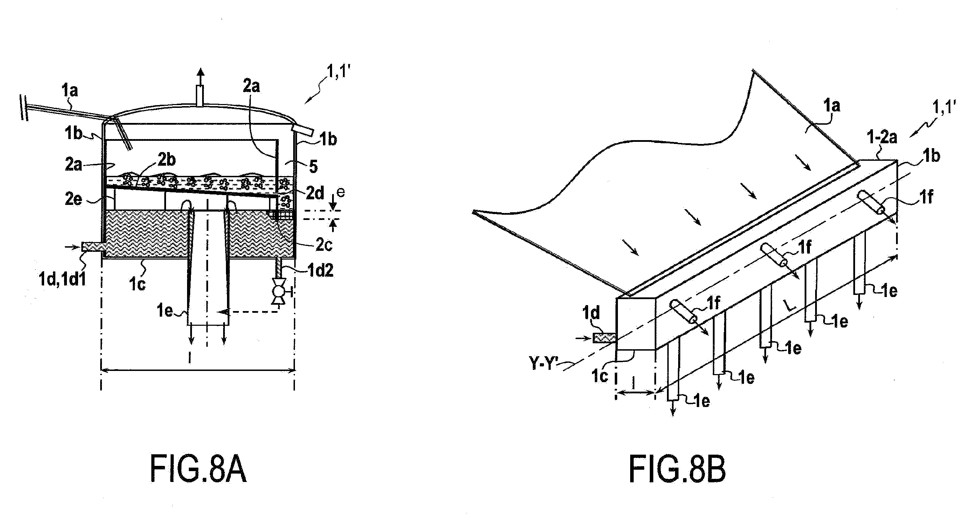

Sur les figures 8A et 8B, on a représenté une deuxième variante de réalisation 1' du dispositif 1, dans laquelle le bac receveur 1-1 et la cuvette 1-2 sont de forme parallélépipédique allongée de longueur L = 15 à 50 m et de largeur du bac receveur 1-1 étant I = 0.5 à 5 m. La deuxième paroi de fond 2b de la cuvette 1-2 est constituée d'une pente inclinée. Les orifices de vidanges 2d sont situées d'un seul côté de la deuxième paroi de fond 2b. De même, la jupe ou paroi latérale inférieure 2c est située d'un seul côté de la paroi de fond 2b en sous-face de celle-ci dans la prolongation de la paroi supérieure latérale 2a. Et, le passage latéral 5 est de forme parallélépipédique longitudinale et également situé d'un seul côté de ladite deuxième paroi de fond 2b. Le passage latéral 5 est de largeur de 3 à 10 cm. Cette forme allongée de bac receveur 1-1 permet de disposer une pluralité de 5 dites premières conduites d'évacuation 1e de liquide 3 et trois deuxièmes conduites supérieures d'évacuation 1f de gaz GNL 4. Le conduit de collecte de liquide de fuite 1a présente ici la forme d'une goulotte constituée d'un platelage s'étendant dans la direction longitudinale YY' du dispositif de collecte et de séparation 1' selon l'invention, mais pourrait être également constitué d'une pluralité de goulottes ou de caniveaux disposés parallèlement successivement dans la direction longitudinale YY'.

Sur les figures 9A, 9B et 9C, on a représenté l'application d'un dispositif de collecte et de séparation 1 selon l'invention sur un support flottant de type FPSO 10.

Sur la figure 9A, le support flottant de type FPSO 10 est ancré au fond de la mer 22 par des lignes d'ancrage 22a. Il reçoit du gaz naturel extrait au niveau de puits au fond de la mer par l'intermédiaire de conduites de liaison fond-surface 21 de production. Il comporte des conduites de transfert 17 ici en phase de déchargement vers un navire, dénommé ici navire enleveur 20 de type méthanier, en configuration dite en tandem. Ledit FPSO 10 possède des équipements de traitement et de liquéfaction de gaz naturel 10b et des cuves de stockage de GNL 12 intégrés au sein de la coque. Ledit FPSO est équipé d'un dispositif de stockage et de guidage 18 desdites conduites flexibles de transfert 17.

Sur les figures 9A et 9B, le support flottant 10 de type FPSO comprend 7 dispositifs de collecte et de séparation 1, 1' selon l'invention, fixés sur les bordés latéraux 10c, 10c1, 10c2 recueillant des liquides de fuite 3,4 provenant de l'installation de traitement 10b reposant sur le pont 10a du support flottant. Chaque dispositif de séparation selon l'invention 1, 1' comprend une dite deuxième cuve de stockage 1-4 en forme de dit réservoir externe cylindrique d'axe vertical à section transversale horizontale carrée, fixée de manière réversible avec des moyens d'accrochage réversibles 4g sur un premier bordé latéral 10c, 10c1, 10c2. Quatre dispositifs de séparation selon l'invention 1, fixés sur un premier bordé 10c-1 sont du type cylindrique tel que représenté dans les figures 1 à 7, tandis que sur l'autre bordé 10c2 sont disposé deux dispositifs de collecte et de séparation 1' du type des figures 8A et 8B. Sur le bordé 10c-1, chaque dispositif 1 déverse le GNL 4 dans un unique réservoir externe 1-4, comme représenté sur la figure 9C, tandis que sur le bordé 10c-2, un premier dispositif de collecte et de séparation 1' déverse le GNL 4 dans deux dites deuxièmes cuves de stockage 1-4, tandis que l'autre dispositif de collecte et de séparation longitudinal 1' de longueur 12, plus petite que la longueur l1 de l'autre dispositif 1', coopère avec un seul réservoir externe 1-4.

Chacun de ces 7 dispositifs de collecte et de séparation 1, 1' reçoit du liquide de fuite 3,4 récolté au niveau d'éléments de platelage 11, récoltant chacun le liquide de fuite provenant d'une partie de ladite installation 10b. La partie du pont 10a supportant l'unité de liquéfaction 10b est donc ici recouverte par un ensemble de 5 éléments de platelage 11 recouvrant toute ladite partie surface de pont susceptible de recevoir du liquide de fuite provenant de ladite unité de liquéfaction 10b avec 3 éléments de platelage 11 déversant le liquide vers 3 dispositifs 1 sur le bordé 10c1 et deux éléments de platelage 11 déversant le liquide vers des dispositif 1' sur le bordé 10c2. Un sixième élément de platelage 11 recouvre la partie arrière de la surface du pont 10a supportant le dispositif de stockage et de guidage 18 de conduite de transfert 17 disposé à proximité de la paroi arrière 10d de la coque, apte à déverser le liquide de fuite provenant de l'installation 10b vers le bordé 10c1 équipé d'un quatrième dispositif de séparation 1 et réservoir externe 1-4.

Sur les figures 9A et 9B, le support 10 comprend 3 dites premières cuves de stockage 12 sensiblement parallélépipédiques disposées côte à côte successivement dans la direction longitudinale XX' et s'étendant sur toute la largeur du support flottant à l'intérieur de sa coque.

Sur la figure 9C, les réservoirs externes 1-4 présentent des parois en acier équipées sur leur face interne d'un matériau d'isolation thermique de sorte que lesdits réservoirs externes peuvent également être considérés comme des réservoirs cryogéniques aptes à contenir du GNL à l'état liquide à -165° C avec cependant un niveau d'isolation beaucoup plus faible que les cuves 12, de manière à favoriser la vaporisation du GNL, sans toutefois que les éléments de structure desdits réservoirs externes 1-4 n'atteignent des températures plus basses que -20 à -40°C, de manière à éviter les ruptures fragiles desdits éléments de structure.

Sur la figure 9C, le plan du pont 10a est montré comme étant incliné en pente descendante d'un angle α1 d'environ 1 degré depuis l'axe médian longitudinal horizontal du support et du pont vers les bordés 10c, 10c-1, 10c-2 constituant les parois latérales longitudinales de la coque. La paroi supérieure ou couvercle 4b du réservoir externe 1-4 est légèrement en contre bas de l'extrémité supérieure des bordés 10c. Les parois latérales cylindriques 4a verticales des réservoirs externes 1-4 présentent une face latérale 4a-1 en vis-à-vis d'un bordé 10c comprenant 2 crochets 4g disposés en partie supérieure et en partie basse aptes à être suspendus à des pièces présentant une forme creuse complémentaire auxdits crochets ou gonds appliqués contre la face externe desdits bordés 10c de manière à ce que ledit réservoir externe 1-4 puisse y être suspendu et ainsi accroché de manière réversible. La collecte et le transfert du liquide de fuite depuis l'installation de traitement 10b vers l'intérieur du réservoir externe 1-4 se fait à l'aide d'un dispositif de collecte et de séparation 1 dont le conduit de collecte la est constitué par l'extrémité d'un élément de platelage 11. Chaque élément de platelage 11 comprend une structure porteuse en acier ou en caillebotis recouverte d'une couche de matériau composite résistant et isolant, par exemple un sandwich Chartek^{®}-Intertherm^{®} 7050 de la société International (UK) du groupe AKZO-NOBEL. Les platelages 11 sont fixés par-dessus le pont 10a, inclinés d'un angle α2 correspondant à une pente de 1 à 5%, de préférence de 2 à 4% par rapport à l'horizontale, en pente descendante depuis l'extrémité du platelage la plus proche de l'axe médian longitudinal vers l'extrémité du platelage la plus basse arrivant au-delà du bordé 10c c'est-à-dire vers l'extérieur du support flottant 10.

En vue de dessus tel que représenté sur la figure 9B, chaque élément de platelage 11 présente une forme trapézoïdale avec un rétrécissement de ses rebords latéraux en direction du dispositif de collecte et de séparation 1, 1' et/ou d'un dit conduit de collecte 1a.

Une fois la ou les fuites maîtrisées, les réservoirs externes 1-4 sont remplis de liquide de fuite GNL 4 à des niveaux variables. On cherche alors à les vider le plus rapidement possible, de manière à remettre l'ensemble des installations à un niveau de sécurité maximal. Selon une variante de réalisation, on met en oeuvre des moyens de transfert comprenant une pompe 4c permettant de faire circuler le liquide de fuite GNL 4 à l'intérieur d'une conduite de liaison 4d s'étendant depuis la proximité du fond 4f du réservoir externe 1-4 jusque et à travers le couvercle 4b et s'étendant au-delà par exemple en direction et jusqu'au ciel de gaz d'une dite première cuve de stockage 12 de GNL à l'intérieur de la coque du support 10.

Dans le mode de réalisation de la figure 9C, le réservoir externe 1-4 comporte une partie qui reste toujours immergée représentant une hauteur de ¼ à ¾ de la hauteur du réservoir externe 1-4 à partir de son fond 4f, plus particulièrement de 1/3 à ½ de la hauteur du réservoir externe 1-4 à partir de son fond 4f, c'est-à-dire en dessous du niveau de la mer 19. On comprend que la hauteur immergée H' varie en fonction de la hauteur de la ligne de flottaison de la coque laquelle varie selon que les cuves 12 sont vides (ligne de flottaison à environ ¼ de la hauteur du réservoir au-dessus de sa paroi de fond 4f) ou que les cuves 12 sont pleines de liquide 4 (ligne de flottaison à environ ¼ de la hauteur du réservoir en dessous de sa paroi supérieure 4b ou environ ¾ au-dessus de la paroi de fond 4f). Dans ce mode de réalisation, la poussée d'Archimède s'exerce sur l'intégralité du volume de réservoir immergé, et de plus, la structure dudit réservoir doit résister à la pression, plus particulièrement dans sa partie basse. Ainsi, les points d'accrochage doivent résister à des efforts principalement dirigés vers le bas dans le cas où le réservoir est plein de liquide de fuites et où le FPSO est partiellement ou complètement vide, et à des efforts dirigés vers le haut lorsque le réservoir est vide et que le FPSO est complètement plein.

Le volume de chacun desdits réservoirs externes 1-4 est dimensionné en fonction des volumes de GNL concernant la zone couverte par les dispositifs de collecte reliés au dit réservoir. On considérera ainsi :
- d'une part le volume des contenants concernés (tuyauteries, réservoirs, pompes, ...) situé entre des vannes amont et des vannes aval, et
- d'autre part le volume de production courant durant une période de temps correspondant au début de l'incident de fuite et la fermeture effective de toutes les vannes amont et aval concernées, c'est à dire en général plusieurs minutes.

Ainsi, le volume de chacun des réservoirs sera fonction de sa localisation par rapport à l'installation, et pourra varier dans des proportions importantes, par exemple de 50 à 300m³.

On a décrit des réservoirs externes 1-4 présentant en partie haute un couvercle à travers le quel passent des conduites d'amenée 1f de GNL, et des conduites d'évacuation de gaz, mais, dans une version simplifiée, ledit réservoir externe 1-4 ne présente pas de couvercle. Il est alors impératif, dès qu'une fuite se produit, de remplir de mousse ledit réservoir, de manière à confiner le GNL, l'évaporation dudit GNL se fait alors directement à l'air libre, à travers l'épaisseur de ladite couche de mousse.

Des agents moussants appropriés sont du type mousse de lutte contre l'incendie (en anglais « fire fighting foam ») commercialisé par la Société ANGUS FIRE (UK).

Sur les figures 9A, 9B et 9C, on n'a pas représenté le bac de décantation 1-3 de la figure 1, celui-ci pouvant toutefois être disposé également contre le bordé 10c, 10c1, 10c2, à côté des réservoirs externes 1-4 en prolongation des extrémités inférieures desdites premières conduites d'évacuation 1e en 1k.

## Revendications

1. Dispositif de collecte et de séparation (1) de liquides aqueux et/ou huileux (3) d'une part et de liquide cryogénique (4) d'autre part, de préférence du gaz liquéfié tel que du GNL, comprenant :
a) un premier réservoir (1-1) comprenant :
a.1) une paroi de fond (1c) dénommée première paroi de fond, traversée par au moins une première conduite tubulaire d'évacuation (1e), ladite première conduite d'évacuation s'étendant d'une hauteur h au-dessus de ladite première paroi de fond (1c), et, de préférence, débouchant à son extrémité inférieure (1e2) sur une cuve de stockage de liquide aqueux et/ou huileux (1-3), dénommé première cuve de stockage, et
a.2) une paroi latérale (1b) dénommée première paroi latérale, de préférence verticale, et
a.3) de préférence, un couvercle ou plafond (1g) recouvrant l'extrémité supérieure dudit premier réservoir, ledit couvercle ou plafond comprenant un premier orifice d'évacuation (1h) apte à permettre l'évacuation d'un gaz, et
b) un deuxième réservoir (1-2) contenu à l'intérieur dudit premier réservoir, ledit deuxième réservoir comprenant :
b.1) une paroi de fond (2b), de préférence inclinée, dénommée deuxième paroi de fond, positionnée au-dessus du niveau de l'extrémité supérieure (1e1) de la (ou des) dite(s) première(s) conduite(s) d'évacuation (1e), ladite deuxième paroi de fond (2b) délimitant avec ladite première paroi de fond (1c) un compartiment inférieur (1-1b) dudit premier réservoir, et
b.2) une paroi latérale supérieure (2a), dénommée deuxième paroi latérale supérieure, de préférence verticale, délimitant ledit deuxième fond et s'étendant dessus ledit deuxième fond (2b) en vis-à-vis de ladite première paroi latérale, de préférence à distance constante de ladite première paroi latérale (1b), ladite deuxième paroi latérale supérieure (2b) comprenant au moins un orifice de vidange (2d) à sa base juste au-dessus de ladite deuxième paroi de fond, dénommé(s) deuxième(s) orifice(s) de vidange (2d), le(s) deuxième(s) orifice(s) de vidange communiquant avec un passage latéral (5), et
b.3) une paroi latérale inférieure (2c) dénommée deuxième paroi inférieure, de préférence verticale, s'étendant dessous ledit deuxième fond (2b) en vis-à-vis de ladite première paroi latérale, de préférence à distance constante de ladite première paroi latérale (1b), et s'étendant jusqu'en dessous du niveau de l'extrémité supérieure (1e1) de la (ou des) dite(s) première(s) conduite(s) d'évacuation (1e), ledit passage latéral (5) étant délimité d'un côté par lesdites deuxièmes parois latérales supérieure (2a) et inférieure (2c) et de l'autre côté par ladite première paroi latérale (1b), et
c) au moins un conduit de collecte de liquides (1a) apte à recueillir les liquides à séparer (3, 4) et à les déverser au sein dudit deuxième réservoir (1-2), ledit conduit de collecte (1a) traversant ladite première paroi latérale (1b) dudit premier réservoir ou son couvercle ou plafond (1g) et/ou débouchant dans ledit deuxième réservoir ou dans le compartiment supérieur (1-1c) dudit premier réservoir au-dessus de l'extrémité supérieure ouverte (1-2a) dudit deuxième réservoir (1-2), et
d) au moins une deuxième conduite d'évacuation (1f), de préférence débouchant à une extrémité sur une cuve de stockage de GNL (1-4) dénommée deuxième cuve de stockage de GNL, à l'extérieur dudit premier réservoir, ladite deuxième conduite d'évacuation (1f) traversant ladite première paroi latérale (1b) dudit premier réservoir ou son couvercle ou plafond (1g) et/ou débouchant à l'autre extrémité dans ledit premier réservoir au-dessus de l'extrémité supérieure ouverte (1-2a) dudit deuxième réservoir (1-2), et
e) ledit premier réservoir (1-1) étant rempli d'eau ou coopérant avec un dispositif d'alimentation (1d) en eau apte à le remplir d'eau (1-1a), dans ledit passage latéral (5) et dans ledit compartiment inférieur (1-1b) dudit premier réservoir en dessous dudit deuxième réservoir, de préférence de l'eau de mer à température ambiante (1-1b), jusqu'à un niveau au-dessus de l'extrémité supérieure (1e1) de (ou des) dite(s) première(s) conduite(s) d'évacuation (1e) et en dessous desdits deuxièmes orifices de vidange (2d) dudit deuxième réservoir.

2. Dispositif selon la revendication 1, **caractérisé en ce qu'**il comprend :
a) un dit premier réservoir (1-1) comprenant :
a.1) une dite première paroi de fond (1c) traversée par une première conduite tubulaire d'évacuation (1e), de préférence un tube central vertical, et
a.2) une dite première paroi latérale (1b) cylindrique verticale, et
a.3) un dit couvercle ou plafond (1g) recouvrant l'extrémité supérieure dudit premier réservoir, ledit couvercle ou plafond comprenant un premier orifice d'évacuation de gaz (1h), et
b) un dit deuxième réservoir (1-2) contenu à l'intérieur dudit premier réservoir, ledit deuxième réservoir comprenant :
b.1) une dite deuxième paroi de fond (2b) inclinée, de préférence tronconique, et
b.2) une dite deuxième paroi latérale supérieure (2a) cylindrique verticale coaxiale (XX') à ladite première paroi latérale et de plus petite section horizontale, et
b.3) une dite deuxième paroi latérale inférieure (2c) formant jupe latérale périphérique cylindrique verticale coaxiale (XX') à ladite première paroi latérale et de plus petite section horizontale, s'étendant dessous ledit deuxième fond (2b) autour de l'extrémité supérieure (1e1) de ladite première conduite d'évacuation (1e), de préférence en prolongation de ladite deuxième paroi latérale supérieure (2a),
c) un dit passage latéral (5) formant un passage annulaire, de préférence de largeur constante, entre lesdites deuxièmes parois latérales supérieure (2a) et inférieure (2c) d'une part et ladite première paroi latérale (1b) dudit premier réservoir (1-1) d'autre part.

3. Dispositif selon la revendication 1 ou 2, **caractérisé en ce que** ladite deuxième paroi de fond (2b) est supportée et solidaire de structures de support dénommées pieds (2e) reposant sur ladite première paroi de fond (1c), lesdits structures support présentant de préférence des surfaces étendues de contact avec l'eau (1-1a) contenue dans ledit compartiment inférieur (1-1b) du premier réservoir (1-1) dessous ledit deuxième réservoir (1-2), aptes à permettre un transfert de calories entre l'eau contenu dans ledit premier réservoir et ladite deuxième paroi de fond.

4. Dispositif selon la revendication 3, **caractérisé en ce que** ladite deuxième paroi de fond (2b) supporte et est solidaire en sous-face de plaques métalliques ou d'acier de préférence verticales (2f), constituant des surfaces étendues de contact avec l'eau contenue dans ledit premier réservoir (1-1) dessous ledit deuxième réservoir (1-2), apte à permettre un transfert de calories entre l'eau (1-1a) contenue dans ledit premier réservoir et le liquide contenu dans ledit deuxième réservoir, lesdites plaques métalliques n'étant pas en contact avec ladite première paroi de fond (1c) dudit premier réservoir.

5. Dispositif selon l'une des revendications 1 à 4, **caractérisé en ce que** ledit premier réservoir (1-1) comprend au moins un premier orifice d'alimentation en eau (1d, 1d1-1d2), de préférence traversant ladite première paroi latérale (1b) et/ou première paroi de fond (1c), débouchant dans ledit premier réservoir en dessous du niveau de l'extrémité inférieure (2c1) de ladite deuxième paroi inférieure latérale (2c) et coopérant avec un dispositif d'alimentation et de circulation d'eau (1d) en continu à l'extérieur dudit premier réservoir, ledit dispositif d'alimentation et de circulation d'eau étant apte à permettre d'évacuer ladite eau (1-1a) par ladite première conduite d'évacuation (1e).

6. Dispositif selon la revendication 5, **caractérisé en ce que** ledit premier réservoir (1-1) comprend en outre un deuxième orifice d'évacuation d'eau et/ou une deuxième conduite d'évacuation d'eau (1d2), de préférence traversant ladite première paroi latérale (1b) ou première paroi de fond (1c), débouchant dans ledit premier réservoir en dessous du niveau de l'extrémité inférieure (2c1) de ladite deuxième paroi latérale inférieure (2c) et coopérant avec un dit dispositif de circulation d'eau (1d) en continue à l'extérieur dudit premier réservoir, ladite eau s'évacuant par ledit deuxième orifice d'évacuation d'eau de façon à maintenir le niveau d'eau (1-1a) à l'intérieur dudit premier réservoir en dessous desdits deuxièmes orifices de vidange (2d).

7. Dispositif selon l'une des revendications 1 à 6, **caractérisée en ce que** ladite première cuve de stockage de liquide (1-3) comprend un dispositif de séparation gravitaire eau-huile, apte à séparer et évacuer séparément une phase huileuse (3-1) et une phase aqueuse (3-2).

8. Dispositif selon l'une des revendications 1 à 7, **caractérisé en ce qu'**au moins lesdites première et deuxièmes parois latérales supérieure et inférieure (1b, 2a, 2c) et dites première et deuxième parois de fond (1c, 2b) et lesdits pieds (2e) sont en tôle métallique ou d'acier.

9. Dispositif selon l'une des revendications 2 à 8, **caractérisé en ce que** lesdites première et deuxièmes parois latérales supérieure et inférieure (1b, 2a, 2c), et dite première conduite d'évacuation (1e) sont cylindriques coaxiales à sections circulaires.

10. Dispositif selon la revendication 1 et l'une des revendications 3 à 8, **caractérisé en ce que** ladite première paroi latérale (1b) forme un dit premier réservoir parallélépipédique allongé et ladite deuxième paroi latérale supérieure (2a) forme un dit deuxième réservoir parallélépipédique de même longueur et de plus petite largeur que ledit premier réservoir, ladite première paroi de fond (1c) étant traversée par une pluralité de dites premières conduites d'évacuation (1e) disposées parallèlement entre elles successivement dans la direction longitudinale YY' de ladite première paroi de fond (1c), ladite deuxième paroi latérale supérieure (2a) comportant en partie supérieure une pluralité de dites deuxièmes conduites d'évacuation de GNL (1f), et lesdits premier et deuxième réservoirs sont disposés l'un par rapport à l'autre de sorte que ledit passage latéral (5) est de forme parallélépipédique longitudinale, lesdites orifices de vidange (2d) et ledit passage latéral (5) s'étendant le long d'un seul bord longitudinal de ladite deuxième paroi de fond (2b).

11. Support installé en mer (10), de manière fixe ou flottant, comprenant une installation de traitement (10b) susceptible de générer des fuites de liquides aqueux et/ou huileux, et des fuites de liquide cryogénique, de préférence du gaz liquéfié tel que du GNL, **caractérisé en ce qu'**il est équipé d'un dispositif (1) selon l'une des revendications 1 à 10.

12. Support selon la revendication 11, caractérisé en ce **qu**'il comprend une dite installation de traitement (10b) sur le pont (10a) dudit support, et au moins une première cuve (12) de stockage de GNL intégrée au sein de la coque (10g) dudit support sous ledit pont (10a) et en ce qu'il comprend au moins une dite deuxième cuve de stockage de GNL de liquide cryogénique (1-4), situé à l'extérieur dudit support et situé au moins en partie, de préférence entièrement, en contrebas du pont (10a) dudit support sur lequel repose ladite installation, ladite deuxième cuve de stockage de GNL (1-4) étant fixée contre un bordé (10c) dudit support (10), de préférence de manière réversible (4g), ledit pont (10a) comprenant ou supportant des premiers moyens de transfert (11) aptes à permettre le transfert de liquides s'écoulant d'une partie au moins de ladite installation, par simple gravité vers un dit conduit de collecte (1a) d'un dit dispositif de collecte et de séparation (1) comprenant une dite deuxième conduite d'évacuation (1f) débouchant à son autre extrémité à une dite deuxième cuve de stockage (1-4) de gaz GNL, lesdits premiers moyens de transfert de liquide de fuite comprenant de préférence un platelage incliné (11), s'étendant depuis dessous une dite partie au moins de l'installation (10b) jusqu'à un dit conduit de collecte (1a).

13. Support selon la revendication 12, **caractérisé en ce que** ladite deuxième cuve de stockage de GNL (1-4) comprend en outre une pompe (4c) et une deuxième conduite de liaison (4d) aptes à transférer ledit liquide cryogénique contenu dans ladite deuxième cuve (1-4) vers une dite première cuve de stockage (12) au sein de la coque dudit support.

14. Procédé de séparation de liquides comprenant des liquides aqueux et/ou huileux (3) et/ou un liquide cryogénique (4), de préférence du gaz liquéfié tel que du GNL, à l'aide d'un dispositif (1) selon l'une des revendications 1 à 10, **caractérisé en ce qu'**il comprend les étapes successives suivantes dans lesquelles :
1) on recueille un dit liquide à séparer (3, 4) dans un dit conduit de collecte (1a) et on le déverse dans ledit deuxième réservoir (1-2), ledit premier réservoir (1-1) étant rempli d'eau (1-1a) dans ledit compartiment inférieur (1-1b) dudit premier réservoir dessous ledit deuxième réservoir, jusqu'à un niveau au-dessus de l'extrémité supérieure (1e1) de la (ou des) dite(s) première(s) conduite(s) d'évacuation (1e) et en dessous desdits deuxièmes orifices de vidange (2d) dudit deuxième réservoir, et
2) on évacue ledit liquide à séparer par lesdits deuxièmes orifices de vidange (2d) à la base dudit deuxième réservoir (1-2) vers ledit passage latéral (5), et
3) selon la nature du liquide à séparer (3,4), on réalise l'une des étapes 3a) ou 3b) suivantes, dans lesquelles :
3a) si le liquide comprend un liquide aqueux et/ou huileux (3), celui-ci est acheminé vers une dite première conduite d'évacuation, de préférence par mise en action d'un dispositif d'alimentation et de circulation d'eau (1d) accélérant l'évacuation d'eau par une dite première conduite d'évacuation, ledit dispositif d'alimentation et de circulation en eau (1d) assurant concomitamment le maintien du niveau d'eau au sein dudit réservoir au-dessus de l'extrémité supérieure (1e1) dudit premier conduit d'évacuation (1e) et en dessous desdits deuxièmes orifices de vidange dudit deuxième réservoir, et
3b) si le liquide comprend un liquide cryogénique (4), de préférence du gaz liquéfié tel que du GNL, celui-ci engendre la création d'un bouchon de glace (6, 6a) au contact de l'eau dans ledit passage latéral (5), voire une couche de glace (6b) sur toute la surface de l'eau (1-1a) au sein du compartiment dudit premier réservoir de sorte que
3b.1) si les quantités et débits de liquide cryogénique au sein dudit deuxième réservoir font que le volume de liquide cryogénique (4) ne déborde pas dudit deuxième réservoir, ledit liquide cryogénique peut être regazéifié par baisse de sa température au contact des parois latérales (2a, 2c) et parois de fond (2b) dudit deuxième réservoir (1-2) et évacué par ledit premier orifice d'évacuation (1h) dudit premier réservoir, et
3b.2) si les quantités et débits de liquide cryogénique au sein dudit deuxième réservoir font que le volume de liquide cryogénique déborde du deuxième réservoir et remplit au moins en partie le compartiment supérieur (1-1c) dudit premier réservoir, ledit liquide cryogénique peut être évacué par ladite deuxième conduite d'évacuation (1f) dans une dite deuxième cuve de stockage (1-4).

15. Procédé selon la revendication 14, **caractérisé en ce que** ladite deuxième cuve de stockage (1-4) est fixée contre et à l'extérieur d'un bordé (10c) d'un support installé en mer (10) comprenant une installation de traitement (10b) sur le pont (10a) dudit support, ledit pont (10a) comprenant ou supportant des premiers moyens de transfert (11) aptes à permettre le transfert de liquides s'écoulant d'une partie au moins de ladite installation, par simple gravité vers un dit conduit de collecte (1a) d'un dit dispositif de collecte et de séparation (1) comprenant une dite deuxième conduite d'évacuation (1f) débouchant à son autre extrémité dans une dite deuxième cuve de stockage (1-4) de gaz GNL, et on alimente ledit premier réservoir avec de l'eau (1-1a) constituée d'eau de mer à température ambiante.

## Patentansprüche

1. Vorrichtung (1) zum Sammeln und Trennen von wässerigen und/oder öligen Flüssigkeiten (3) einerseits und einer kryogenen Flüssigkeit (4) andererseits, vorzugsweise von Flüssigerdgas, wie LNG, umfassend:
a) einen ersten Behälter (1-1), umfassend:
a.1) eine Bodenwand (1c), erste Bodenwand genannt, die von mindestens einer ersten röhrenförmigen Ableitung (1 e) durchquert wird, wobei sich die erste Ableitung in einer Höhe h über der ersten Bodenwand (1c) erstreckt und vorzugsweise an ihrem unteren Ende (1e2) in eine Auffangwanne von wässeriger und/oder öliger Flüssigkeit (1-3), erste Auffangwanne genannt, mündet, und
a.2) eine Seitenwand (1 b), erste Seitenwand genannt, die vorzugsweise vertikal ist, und
a.3) vorzugsweise eine Abdeckung oder Decke (1 g), die das obere Ende des ersten Behälters abdeckt, wobei die Abdeckung oder Decke eine erste Ableitungsöffnung (1 h) umfasst, die geeignet ist, die Ableitung eines Gases zu ermöglichen, und
b) einen zweiten Behälter (1-2), der im Inneren des ersten Behälters enthalten ist, wobei der zweite Behälter umfasst:
b.1) eine vorzugsweise geneigte Bodenwand (2b), zweite Bodenwand genannt, die über dem Niveau des oberen Endes (1e1) der ersten Ableitung(en) (1 e) positioniert ist, wobei die zweiten Bodenwand (2b) mit der ersten Bodenwand (1 c) ein unteres Abteil (1-1b) des ersten Behälters bildet, und
b.2) eine obere Seitenwand (2a), zweite obere Seitenwand genannt, die vorzugsweise vertikal ist, den zweiten Boden begrenzt und sich über dem zweiten Boden (2b) gegenüber der ersten Seitenwand vorzugsweise in einem konstanten Abstand zu der ersten Seitenwand (1b) erstreckt, wobei die zweite obere Seitenwand (2b) mindestens eine Entleerungsöffnung (2d) an ihrer Basis direkt über der zweiten Bodenwand, zweite Entleerungsöffnung(en) (2d) genannt, umfasst, wobei die zweite(n) Entleerungsöffnung(en) mit einem seitlichen Durchgang (5) in verbunden steht(en), und
b.3) eine untere Seitenwand (2c), zweite untere Wand genannt, die vorzugsweise vertikal ist, sich unter dem zweiten Boden (2b) gegenüber der ersten Seitenwand vorzugsweise in einem konstanten Abstand zu der ersten Seitenwand (1b) erstreckt und sich direkt unter dem Niveau des oberen Endes (1e1) der ersten Ableitung(en) (1 e) erstreckt, wobei der seitliche Durchgang (5) auf einer Seite durch die zweiten oberen (2a) und unteren (2c) Seitenwände und auf der anderen Seite durch die erste Seitenwand (1 b) begrenzt ist, und
c) mindestens eine Sammelleitung von Flüssigkeiten (1a), die geeignet ist, die zu trennenden Flüssigkeiten (3, 4) zu sammeln und sie in den zweiten Behälter (1-2) zu leeren, wobei die Sammelleitung (1a) durch die erste Seitenwand (1 b) des ersten Behälters oder seine Abdeckung oder Decke (1 g) hindurchgeht und/oder in dem zweiten Behälter oder dem oberen Abteil (1-1 c) des ersten Behälters über dem offenen oberen Ende (1-2a) des zweiten Behälters (1-2) mündet, und
d) mindestens eine zweite Ableitung (1 f), die vorzugsweise an einem Ende in eine Auffangwanne von LNG (1-4), zweite LNG-Auffangwanne genannt, außerhalb des ersten Behälters mündet, wobei die zweite Ableitung (1f) durch die erste Seitenwand (1 b) des ersten Behälters oder seine Abdeckung oder Decke (1 g) hindurchgeht und/oder am anderen Ende in den ersten Behälter über dem offenen oberen Ende (1-2a) des zweiten Behälters (1-2) mündet, und
e) wobei der erste Behälter (1-1) mit Wasser gefüllt ist oder mit einer Wasserversorgungseinrichtung (1 d) zusammenwirkt, die geeignet ist, ihn mit Wasser zu füllen (1-1a), und zwar in dem seitlichen Durchgang (5) und in dem unteren Abteil (1-1b) des ersten Behälters unter dem zweiten Behälter, vorzugsweise mit Meerwasser mit Raumtemperatur (1-1b), bis zu einem Niveau über dem oberen Ende (1e1) der ersten Ableitung(en) (1 e) und unter den zweiten Entleerungsöffnungen (2d) des zweiten Behälters.

2. Vorrichtung nach Anspruch 1, **dadurch gekennzeichnet, dass** sie umfasst:
a) einen ersten Behälter (1-1), umfassend:
a.1) eine erste Bodenwand (1 c), die von eine ersten röhrenförmigen Ableitung (1 e), vorzugsweise einem vertikalen zentralen Rohr, durchquert wird, und
a.2) eine erste vertikale zylindrische Seitenwand (1 b), und
a.3) eine Abdeckung oder Decke (1 g), die das obere Ende des ersten Behälters bedeckt, wobei die Abdeckung oder Decke eine erste Gasableitungsöffnung (1 h) umfasst, und
b) einen zweiten Behälter (1-2), der im Inneren des ersten Behälters enthalten ist, wobei der zweite Behälter umfasst:
b.1) eine zweite geneigte, vorzugsweise kegelstumpfartige Bodenwand (2b), und
b.2) eine zweite vertikale zylindrische obere Seitenwand (2a) koaxial (XX') zur ersten Seitenwand und mit einem kleineren horizontalen Querschnitt, und
b.3) eine zweite untere Seitenwand (2c), die eine vertikale zylindrische seitliche Umfangsschürze koaxial (XX') zur ersten Seitenwand und mit einem kleineren horizontalen Querschnitt bildet, die sich unter dem zweiten Boden (2b) um das obere Ende (1e1) der ersten Ableitung (1 e) vorzugsweise in der Verlängerung der zweiten oberen seitenwand (2a) erstreckt,
c) einen seitlichen Durchgang (5), der einen ringförmigen Durchgang, vorzugsweise mit konstanter Breite zwischen den beiden oberen (2a) und unteren (2c) Seitenwänden einerseits und der ersten Seitenwand (1 b) des ersten Behälters (1-1) andererseits bildet.

3. Vorrichtung nach Anspruch 1 oder 2, **dadurch gekennzeichnet, dass** die zweite Bodenwand (2b) von als Füße (2e) bezeichneten Tragstrukturen, die auf der ersten Bodenwand (1c) stehen, getragen wird und mit diesen verbunden ist, wobei die Tragstrukturen vorzugsweise erweiterte Kontaktflächen mit dem in dem unteren Abteil (1-1b) des ersten Behälters (1-1) unter dem zweiten Behälter (1-2) enthaltenen Wasser (1-1 a) aufweisen, die geeignet sind, eine Wärmeübertragung zwischen dem im ersten Behälter enthaltenen Wasser und der zweiten Bodenwand zu ermöglichen.

4. Vorrichtung nach Anspruch 3, **dadurch gekennzeichnet, dass** die zweite Bodenwand (2b) an der Unterseite vorzugsweise vertikale Metall- oder Stahlplatten (2f) trägt und mit diesen verbunden ist, die erweiterte Kontaktflächen mit dem in dem ersten Behälter (1-1) unter dem zweiten Behälter (1-2) enthaltenen Wasser darstellen, die geeignet sind, eine Wärmeübertragung zwischen dem im ersten Behälter enthaltenen Wasser (1-1a) und der in dem zweiten Behälter enthaltenen Flüssigkeit zu ermöglichen, wobei die Metallplatten nicht mit der ersten Bodenwand (1 c) des ersten Behälters in Kontakt sind.

5. Vorrichtung nach einem der Ansprüche 1 bis 4, **dadurch gekennzeichnet, dass** der erste Behälter (1-1) mindestens eine erste Wasserversorgungsöffnung (1d, 1d1-1 d2) umfasst, die vorzugsweise durch die erste Seitenwand (1 b) und/oder erste Bodenwand (1 c) hindurchgeht, in den ersten Behälter unter dem Niveau des unteren Endes (2c1) der zweiten unteren Seitenwand (2c) mündet und mit einer Vorrichtung zur kontinuierlichen Wasserversorgung und -zirkulation (1 d) außerhalb des ersten Behälters zusammenwirkt, wobei die Wasserversorgungs- und -zirkulationsvorrichtung geeignet ist, die Ableitung des Wassers (1-1 a) durch die erste Ableitung (1 e) zu ermöglichen.

6. Vorrichtung nach Anspruch 5, **dadurch gekennzeichnet, dass** der erste Behälter (1-1) ferner eine zweite Wasserableitungsöffnung und/oder eine zweite Wasserableitung (1 d2) umfasst, die vorzugsweise durch die erste seitliche Wand (1 b) oder erste Bodenwand (1c) hindurchgeht, in den ersten Behälter unter dem Niveau des unteren Endes (2c1) der zweiten unteren Seitenwand (2c) mündet und mit einer Vorrichtung zur kontinuierlichen Wasserzirkulation (1 d) außerhalb des ersten Behälters zusammenwirkt, wobei das Wasser durch die zweite Wasserableitungsöffnung abgeleitet wird, um das Wasserniveau (1-1 a) im Inneren des ersten Behälters unter den zweiten Entleerungsöffnungen (2d) zu halten.

7. Vorrichtung nach einem der Ansprüche 1 bis 6, **dadurch gekennzeichnet, dass** die erste Flüssigkeitsauffangwanne (1-3) eine Gravitätstrennvorrichtung Wasser-Öl umfasst, die geeignet ist, eine ölige Phase (3-1) und eine wässerige Phase (3-2) zu trennen und getrennt abzuleiten.

8. Vorrichtung nach einem der Ansprüche 1 bis 7, **dadurch gekennzeichnet, dass** mindestens die erste und die zweiten oberen und unteren Seitenwände (1 b, 2a, 2c) und ersten und zweiten Bodenwände (1c, 2b) und die Füße (2e) aus Metall- oder Stahlblech sind.

9. Vorrichtung nach einem der Ansprüche 2 bis 8, **dadurch gekennzeichnet, dass** die erste und die zweiten oberen und unteren Seitenwände (1 b, 2a, 2c) und die erste Ableitung (1 e) zylindrisch koaxial mit kreisförmigen Querschnitten sind.

10. Vorrichtung nach Anspruch 1 und einem der Ansprüche 3 bis 8, **dadurch gekennzeichnet, dass** die erste Seitenwand (1 b) einen ersten länglichen parallelflachen Behälter bildet und die obere zweite Seitenwand (2a) einen zweiten parallelflachen Behälter derselben Länge und von kleinerer Breite als der erste Behälter bildet, wobei die erste Bodenwand (1 c) von einer Vielzahl von ersten Ableitungen (1 e) durchquert wird, die zueinander parallel nacheinander in die Längsrichtung YY' der ersten Bodenwand (1 c) angeordnet sind, wobei die zweite obere Seitenwand (2a) im oberen Teil eine Vielzahl von zweiten LNG-Ableitungen (1 f) umfasst, und dass die ersten und zweiten Behälter zueinander derart angeordnet sind, dass der seitliche Durchgang (5) von länglicher parallelflacher Form ist, wobei sich die Entleerungsöffnungen (2d) und der seitliche Durchgang (5) entlang eines einzigen Längsrandes der zweiten Bodenwand (2b) erstrecken.

11. Stütze (10), die im Meer fest oder schwimmend befestigt ist, umfassend eine Bearbeitungsanlage (10b), die geeignet ist, Leckagen von wässerigen und/oder öligen Flüssigkeiten und Leckagen einer kryogenen Flüssigkeit, vorzugsweise von Flüssigerdgas, wie LNG, zu erzeugen, **dadurch gekennzeichnet, dass** sie mit einer Vorrichtung (1) nach einem der Ansprüche 1 bis 10 ausgestattet ist.

12. Stütze nach Anspruch 11, **dadurch gekennzeichnet, dass** sie eine Bearbeitungsanlage (10b) auf der Brücke (10a) der Stütze und mindestens eine erste LNG-Auffangwanne (12), die in den Körper (10g) der Stütze unter der Brücke (10a) integriert ist, umfasst, und dass sie mindestens eine zweite LNG-Auffangwanne von kryogener Flüssigkeit (1-4), die sich außerhalb der Stütze und zumindest teilweise, vorzugsweise zur Gänze, unten an der Brücke (10a) der Stütze, auf der die Anlage steht, befindet, umfasst, wobei die zweite LNG-Auffangwanne (1-4) gegen einen Rand (10c) der Stütze (10), vorzugsweise reversibel (4g), befestigt ist, wobei die Brücke (10a) erste Weiterleitungsmittel (11) umfasst oder trägt, die geeignet sind, die Weiterleitung von Flüssigkeiten, die von mindestens einem Teil der Anlage abfließen, durch einfache Schwerkraft zu einer Sammelleitung (1 a) einer Sammel- und Trennvorrichtung (1), umfassend eine zweite Ableitung (1f), die an ihrem anderen Ende in eine zweite LNG-Auffangwanne (1-4) mündet, zu ermöglichen, wobei die ersten Weiterleitungsmittel von Leckageflüssigkeit vorzugsweise ein geneigtes Einlageelement (11) umfassen, das sich von unter mindestens einem Teil der Anlage (10b) bis zu einer Sammelleitung (1a) erstreckt.

13. Stütze nach Anspruch 12, **dadurch gekennzeichnet, dass** die zweite LNG-Auffangwanne (1-4) ferner eine Pumpe (4c) und eine zweite Verbindungsleitung (4d) umfasst, die geeignet sind, die in der zweiten Wanne (1-4) enthaltene kryogene Flüssigkeit zu einer ersten Auffangwanne (12) im Körper der Stütze weiterzuleiten.

14. Verfahren zum Trennen von Flüssigkeiten, umfassend wässerige und/oder ölige Flüssigkeiten (3) und/oder eine kryogene Flüssigkeit (4), vorzugsweise Flüssigerdgas, wie LNG, mit Hilfe einer Vorrichtung (1) nach einem der Ansprüche 1 bis 10, **dadurch gekennzeichnet, dass** es die folgenden aufeinanderfolgenden Schritte umfasst, bei denen:
1) eine zu trennende Flüssigkeit (3, 4) in einer Sammelleitung (1a) gesammelt und in den zweiten Behälter (1-2) geleert wird, wobei der erste Behälter (1-1) mit Wasser (1-1a) in dem unteren Abteil (1-1b) des ersten Behälters unter dem zweiten Behälter bis zu einem Niveau über dem oberen Ende (1e1) der ersten Ableitung(en) (1 e) und unter den zweiten Entleerungsöffnungen (2d) des zweiten Behälters gefüllt wird, und
2) die zu trennende Flüssigkeit durch die zweiten Entleerungsöffnungen (2d) an der Basis des zweiten Behälters (1-2) zu dem seitlichen Durchgang (5) abgleitet wird, und
3) je nach der Art der zu trennenden Flüssigkeit (3, 4) einer der folgenden Schritte 3a) oder 3b) durchgeführt wird, bei denen:
3a) wenn die Flüssigkeit eine wässerige und/oder ölige Flüssigkeit (3) umfasst, diese zu einer ersten Ableitung vorzugsweise durch Inbetriebsetzung einer Wasserversorgungs- und -zirkulationsvorrichtung (1d), die die Wasserableitung durch eine erste Ableitung beschleunigt, befördert wird, wobei die Wasserversorgungs- und - zirkulationsleitung (1d) begleitend die Aufrechterhaltung des Wasserniveaus innerhalb des Behälters über dem oberen Ende (1 e1) der ersten Ableitung (1 e) und unter den zweiten Entleerungsöffnungen des zweiten Behälters gewährleistet, und
3b) wenn die Flüssigkeit eine kryogene Flüssigkeit (4), vorzugsweise Flüssigerdgas, wie LNG, enthält, diese die Erzeugung eines Eispfropfens (6, 6a) im Kontakt mit dem Wasser in dem seitlichen Durchgang (5) bzw. einer Eisschicht (6b) auf der gesamten Wasseroberfläche (1-1 a) innerhalb des Abteils des ersten Behälters hervorruft, so dass
3b.1) wenn die Mengen und Durchsatzraten an kryogener Flüssigkeit in dem zweiten Behälter bewirken, dass das Volumen an kryogener Flüssigkeit (4) den zweiten Behälter nicht übersteigt, die kryogene Flüssigkeit durch Senken ihrer Temperatur im Kontakt mit den Seitenwänden (2a, 2c) und den Bodenwänden (2b) des zweiten Behälters (1-2) rückvergast und durch die erste Ableitungsöffnung (1h) des ersten Behälters abgeleitet werden kann, und
3b.2) wenn die Mengen und Durchsatzraten an kryogener Flüssigkeit in dem zweiten Behälter bewirken, dass das Volumen an kryogener Flüssigkeit den zweiten Behälter übersteigt und zumindest teilweise das obere Abteil (1-1c) des ersten Behälters füllt, die kryogene Flüssigkeit durch die zweite Ableitung (1 f) in eine zweite Auffangwanne (1-4) abgeleitet werden kann.

15. Verfahren nach Anspruch 14, **dadurch gekennzeichnet, dass** die zweite Auffangwanne (1-4) gegen einen und außerhalb eines Randes (10c) einer im Meer aufgestellten Stütze (10) befestigt ist, umfassend eine Bearbeitungsanlage (10b) auf der Brücke (10a) der Stütze, wobei die Brücke (10a) erste Weiterleitungsmittel (11) umfasst oder trägt, die geeignet sind, die Weiterleitung von Flüssigkeiten, die aus mindestens einem Teil der Anlage abfließen, durch einfache Schwerkraft zu einer Sammelleitung (1a) einer Sammel- und Trennvorrichtung (1) zu ermöglichen, umfassend eine zweite Ableitung (1 f), die an ihrem anderen Ende in eine zweite LNG-Auffangwanne (1-4) mündet, und dass der erste Behälter mit Wasser (1-1 a) versorgt wird, das von Meerwasser mit Raumtemperatur gebildet ist.

## Claims

1. A device (1) for collecting and separating aqueous and/or oily liquids (3) and cryogenic liquid (4), preferably liquefied gas such as LNG, the device comprising:
a) a first container (1-1) comprising:
· a.1) a bottom wall (1c) referred to as a "first" bottom wall, having at least a first tubular discharge pipe (1e) passing therethrough, said first discharge pipe extending over a height h above said first bottom wall (1c) and preferably opening out at its bottom end (1e2) into a storage tank (1-3) for storing aqueous and/or oily liquid, referred to as a "first" storage tank;
· a.2) a preferably-vertical side wall (1b) referred to as a "first" side wall; and
· a.3) preferably, a cover or roof (1g) covering the top end of said first container, said cover or roof having a first discharge orifice (1h) suitable for allowing a gas to be discharged;
b) a second container (1-2) contained inside said first container, said second container comprising:
· b.1) a preferably-sloping bottom wall (2b), referred to as a "second" bottom wall, the bottom wall being positioned above the level of the top end (1e1) of said first discharge pipe(s) (1e), said second bottom wall (2b) co-operating with said first bottom wall (1c) to define a bottom compartment (1-1b) of said first tank; and
· b.2) a preferably-vertical top side wall (2a), referred to as a "second" top side wall, defining said second bottom and extending over said second bottom (2b) facing said first side wall, preferably at a constant distance from said first side wall (1b), said second top side wall (2b) having at least one drain orifice (2d) in its base immediately above said second bottom wall, referred to as "second" drain orifice(s) (2d), the second drain orifice(s) communicating with a lateral passage (5) ; and
· b.3) a preferably vertical bottom side wall (2c), referred to as the "second" bottom wall, extending under said second bottom (2b) facing said first side wall, preferably at a constant distance from said first side wall (1b), and extending to below the level of the top end (1e1) of said first discharge pipe(s) (1e), said lateral passage (5) being defined on one side by said second top and bottom side walls (2a, 2c) and on the other side by said first side wall (1b);
c) at least one liquid collector duct (1a) suitable for receiving the liquids (3, 4) that are to be separated and for pouring them into said second container (1-2), said collector duct (1a) passing through said first side wall (1b) of said first container or through its cover or roof (1g) and/or opening out into said second container or into the top compartment (1-1c) of said first container above the open top end (1-2a) of said second container (1-2);
d) at least one second discharge pipe (If), preferably opening out at one end to an LNG storage tank (1-4) referred to as the "second" LNG storage tank, outside said first container, said second discharge pipe (If) passing through said first side wall (1b) of said first container or its cover or roof (1g) and/or opening out at the other end into said first container above the open top end (1-2a) of said second container (1-2); and
e) said first container (1-1) being filled with water or co-operating with a water feed device (1d) suitable for filling it with water (1-1a) in said lateral passage (5) and in said bottom compartment (1-1b) of said first container under said second container, preferably seawater at ambient temperature (1-1b), up to a level above the top end (1e1) of said first discharge pipe(s) (1e) and below said second drain orifices (2d) of said second container.

2. A device according to claim 1, **characterized in that** it comprises:
a) a said first container (1-1) comprising:
· a.1) a said first bottom wall (1c) having a first tubular discharge pipe (1e) passing therethrough, preferably a vertical central tube;
· a.2) a said first side wall (1b) that is cylindrical and vertical; and
· a.3) a said cover or roof (1g) covering the top end of said first container, said cover or roof having a first gas discharge orifice (1h);
b) a said second container (1-2) contained inside said first container, said second container comprising:
· b.1) a said second bottom wall (2b) that is sloping, and preferably frustoconical;
· b.2) a said second top side wall (2a) that is vertical and cylindrical, and coaxial (XX') with said first side wall and of smaller horizontal section; and
· b.3) a said second bottom side wall (2c) forming a peripheral lateral skirt that is cylindrical, vertical, and coaxial (XX') with said first side wall and of smaller horizontal section, extending under said second bottom (2b) around the top end (1e1) of said first discharge pipe (1e), preferably extending said second top side wall (2a); and
c) a said lateral passage (5) forming an annular passage, preferably of constant width, between said second top and bottom side walls (2a, 2c) and said first side wall (1b) of said first container (1-1).

3. A device according to claim 1 or claim 2, **characterized in that** said second bottom wall (2b) is supported by and secured to support structures referred to as "legs" (2e) standing on said first bottom wall (1c), said support structures preferably presenting extensive contact areas with the water (1-1a) contained in said bottom compartment (1-1b) of said first container (1-1) under said second container (1-2), and suitable for enabling heat to be transferred between the water contained in said first container and said second bottom wall.

4. A device according to claim 3, **characterized in that** said second bottom wall (2b) supports and is secured via its under face to preferably vertical metal or steel plates (2f) constituting extensive contact areas with the water contained in said first container (1-1) under a said second container (1-2), suitable for transferring heat between the water (1-1a) contained in said first container and the liquid contained in said second container, said metal plates not being in contact with said first bottom wall (1c) of said first container.

5. A device according to any one of claims 1 to 4, **characterized in that** said first container (1-1) comprises at least a first water feed orifice (1d, 1d1-1d2), preferably passing through said first side wall (1b) and/or said first bottom wall (1c), opening out into said first container below the level of the bottom end (2c1) of said second bottom side wall (2c) and co-operating with a device (1d) for feeding and continuously circulating water outside said first container, said water feed and circulation device being suitable for discharging said water (1-1a) via said first discharge pipe (1e).

6. A device according to claim 5, **characterized in that** said first container (1-1) further comprises a second water discharge orifice and/or a second water discharge pipe (1d2), preferably passing through said first side wall (1b) or first bottom wall (1c), opening out into said first container below the level of the bottom end (2c1) of said second bottom side wall (2c) and co-operating with a said device (1d) for continuously circulating water outside said first container, said water being discharged via said second water discharge orifice in such a manner as to maintain the level of the water (1-1a) inside said first container below said second drain orifices (2d).

7. A device according to any one of claims 1 to 6, **characterized in that** said first liquid storage tank (1-3) comprises a water-oil gravity separator device suitable for separating an oily phase (3-1) and an aqueous phase (3-2) and for discharging them separately.

8. A device according to any one of claims 1 to 7, **characterized in that** at least said first and second top and bottom side walls (1b, 2a, 2c) and said first and second bottom walls (1c, 2b) and said legs (2e) are made of sheet metal or steel.

9. A device according to any one of claims 2 to 8, **characterized in that** said first and second top and bottom side walls (1b, 2a, 2c) and said first discharge pipe (1e) are cylindrical, coaxial, and circular in section.

10. A device according to claim 1 and any one according to any one of claims 3 to 8, **characterized in that** said first side wall (1b) forms a said first container that is an elongate rectangular parallelepiped and said second top side wall (2a) forms a said second container that is a rectangular parallelepiped of the same length and of smaller width than said first container, said first bottom wall (1c) having a plurality of said first discharge pipes (1e) passing therethrough, being arranged parallel to one another in succession in the longitudinal direction YY' of said first bottom wall (1c), said second top side wall (2a) including a plurality of said second LNG discharge pipes (If) in its top portion, and said first and second containers are arranged relative to each other in such a manner that said lateral passage (5) is in the form of a longitudinal rectangular parallelepiped, said drain orifices (2d) and said lateral passage (5) extending along a single longitudinal edge of said second bottom wall (2b).

11. A support installed at sea (10), grounded on the sea bottom or floating, including a processor installation (10b) that might generate leaks of aqueous and/or oily liquids, and also leaks of cryogenic liquid, preferably of liquefied gas such as LNG, the support being **characterized in that** it is fitted with a device (1) according to any one of claims 1 to 10.

12. A support according to claim 11, **characterized in that** it includes a said processor installation (10b) on the deck (10a) of said support, and at least one first LNG storage tank (12) incorporated within the hull (10g) of said support under said deck (10a), and **in that** it includes at least one second LNG cryogenic liquid storage tank (1-4) situated outside said support and situated at least in part, and preferably entirely, below the deck (10a) of said support on which said installation stands, said second LNG storage tank (1-4) being fastened against a side (10c) of said support (10), preferably in reversible manner (4g), said deck (10a) comprising or supporting first transfer means (11) suitable for enabling liquid flowing from at least a portion of said installation to be transferred merely under gravity towards a said collector duct (1a) of a said collector and separator device (1) having a said second discharge pipe (If) opening out at its other end into a said second LNG gas storage tank (1-4), said first leakage liquid transfer means preferably comprising sloping decking (11) that extends from under a said portion at least of the installation (10b) to a said collector duct (1a).

13. A support according to claim 12, **characterized in that** said second LNG storage tank (1-4) further comprises a pump (4c) and a second connection pipe (4d) suitable for transferring said cryogenic liquid contained in said second tank (1-4) to a said first storage tank (12) within the hull of said support.

14. A method of separating liquids comprising aqueous and/or oily liquids (3) and/or a cryogenic liquid (4), preferably liquefied gas such as LNG, with the help of a device (1) according to any one of claims 1 to 10, **characterized in that** it comprises the following successive steps:
1) collecting a said liquid to be separated (3, 4) in a said collector duct (1a) and pouring it into said second container (1-2), said first container (1-1) being filled with water (1-1a) in said bottom compartment (1-1b) of said first container below said second container and up to a level above the top end (1e1) of said first discharge pipe(s) (1e) and below said second drain orifices (2d) of said second container;
2) discharging said liquid to be separated via said second drain orifices (2d) at the base of said second container (1-2) towards said lateral passage (5); and
3) depending on the nature of the liquid to be separated (3, 4), performing one of the following steps 3a) or 3b):
· 3a) if the liquid comprises an aqueous and/or oily liquid (3), taking the liquid to a said first discharge pipe, preferably by putting into operation a device (1d) for feeding and circulating water to accelerate the discharge of water via a said first discharge pipe, said water feed and circulation device (1d) simultaneously maintaining the water level within said container above the top end (1e1) of said first discharge duct (1e) and below said second drain orifices of said second container; and
· 3b) if the liquid comprises a cryogenic liquid (4), preferably liquefied gas such as LNG, the liquid causing a plug of ice (6, 6a) to be created on making contact with the water in said lateral passage (5), or indeed a layer of ice (6b) over the entire surface of the water (1-1a) within the compartment of said first container, such that:
· 3b.1) if the quantities and the flow rates of cryogenic liquid within said second container mean that the volume of cryogenic liquid (4) does not overflow from said second container, said cryogenic liquid can be regasified by lowering its temperature in contact with the side and bottom walls (2a, 2c, 2b) of said second container (1-2) and discharged via said first discharge orifice (1h) in said first container; and
· 3b.2) if the quantities and the flow rate of cryogenic liquid within said second container mean that the volume of cryogenic liquid overflows from the second container and fills the top compartment (1-1c) of said first container at least in part, said cryogenic liquid can be discharged via said second discharge pipe (If) into a said second storage tank (1-4).

15. A method according to claim 14, **characterized in that** said second storage tank (1-4) is fastened against and outside a side (10c) of a support installed at sea (10) and including a processor installation (10b) on the deck (10a) of said support, said deck (10a) comprising or supporting first transfer means (11) suitable for enabling liquid flowing from at least a portion of said installation to be transferred merely under gravity towards a said collector duct (1a) of a said collector and separator device (1) having a said second discharge pipe (If) opening out at its other end into a said second LNG storage tank (1-4), and said first container is fed with water (1-1a) constituted by seawater at ambient temperature.
